(19) Europäisches Patentamt / European Patent Office / Office européen des brevets

(11) **EP 3 039 763 B1**

(12) **EUROPEAN PATENT SPECIFICATION**

(45) Date of publication and mention
of the grant of the patent:
**01.03.2017 Bulletin 2017/09**

(21) Application number: **15725152.1**

(22) Date of filing: **08.05.2015**

(51) Int Cl.:
*H02J 3/24* (2006.01)    *G01R 31/42* (2006.01)
*G01R 27/32* (2006.01)

(86) International application number:
**PCT/US2015/029834**

(87) International publication number:
**WO 2015/179139 (26.11.2015 Gazette 2015/47)**

(54) **MONITORING VOLTAGE STABILITY OF A TRANSMISSION CORRIDOR**

ÜBERWACHUNG DER SPANNUNGSSTABILITÄT EINES GETRIEBEKORRIDORS

SURVEILLANCE DE LA STABILITÉ DE LA TENSION D'UN COULOIR DE TRANSMISSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.05.2014 US 201414281336**

(43) Date of publication of application:
**06.07.2016 Bulletin 2016/27**

(73) Proprietor: **Quanta Technology, LLC**
**Raleigh NC 27607 (US)**

(72) Inventors:
• **GLAVIC, Mevludin**
**Raleigh, North Carolina 27607 (US)**
• **MADANI, Vahid**
**Raleigh, North Carolina 27607 (US)**
• **NOVOSEL, Damir**
**Raleigh, North Carolina 27607 (US)**

(74) Representative: **Appleyard Lees IP LLP**
**15 Clare Road**
**Halifax HX1 2HY (GB)**

(56) References cited:
**US-B1- 6 219 591    US-B1- 6 249 719
US-B2- 7 200 500**

• **CORSI S ET AL: "A Real-Time Voltage Instability
Identification Algorithm Based on Local Phasor
Measurements", IEEE TRANSACTIONS ON
POWER SYSTEMS, IEEE SERVICE CENTER,
PISCATAWAY, NJ, US, vol. 23, no. 3, 1 August
2008 (2008-08-01) , pages 1271-1279,
XP011226892, ISSN: 0885-8950, DOI:
10.1109/TPWRS.2008.922586 cited in the
application**
• **GOH H H ET AL: "Dynamic estimation of power
system stability in different Kalman filter
implementations", PROCEEDINGS OF THE 2014
IEEE NW RUSSIA YOUNG RESEARCHERS IN
ELECTRICAL AND ELECTRONIC ENGINEERING
CONFERENCE, IEEE, 3 February 2014
(2014-02-03), pages 41-46, XP032609005, DOI:
10.1109/ELCONRUSNW.2014.6839197 ISBN:
978-1-4799-2593-3 [retrieved on 2014-06-18]**

**Description**

**TECHNICAL FIELD**

The present invention relates generally to monitoring the voltage stability of a transmission corridor through which power flows between different parts of a power system, and in particular relates to computing an index indicating such voltage stability.

**BACKGROUND**

A power system generates electric power at one part of the system and transmits that power via a transmission corridor for use by another part of the system. The transmission corridor is considered to be stable in terms of voltage if the corridor maintains steady acceptable voltages not only under normal operating conditions but also after a disturbance to the system (e.g., a line outage). A voltage stable corridor therefore regains acceptable voltages after a disturbance, rather than oscillating or monotonically decreasing even in response to attempted voltage restoration mechanisms.

Transmission corridor voltage instability causes power blackouts and therefore has huge economic and societal costs. Known approaches to preventing blackouts monitor the corridor's real-time proximity to voltage instability and take appropriate control and protective actions as needed to mitigate system degradation or disturbance propagation. For example, such actions may include load shedding.

Many of these known approaches exploit the relation of the corridor's voltage instability to the power system's maximum loadability. In particular, the approaches identify the corridor's voltage instability as being strongly related to the inability of the combined generation and transmission parts of the system to provide the power requested by the receiving (i.e., load) part of the system. The approaches therefore employ a voltage instability criterion expressed directly or indirectly in terms of the system's maximum deliverable power, which is reached when the magnitude of the Thevenin equivalent impedance of the combined generation and transmission parts of the system equals the magnitude of the equivalent load impedance of the power receiving part: $|\bar{Z}_{Th}| = |\bar{Z}_l|$.

At least some of these approaches estimate the Thevenin equivalent impedance of the combined generation and transmission parts of the system in stages. Such multi-stage approaches involve estimating the power generating part's Thevenin equivalent. Some known techniques for "estimating" the power generating part's Thevenin equivalent simply assume that either the Thevenin equivalent voltage or impedance of the power generating part is known. See US Patent No. 7,200,500B2, April 2007. Other techniques actually identify (i.e., track) the power generating part's Thevenin equivalent in the interest of accuracy, i.e., without making the above assumption. One such tracking technique performs recursive least squares using voltage and current phasor measurements taken at an interface between the power generating part and the transmission corridor. See US Patent No. 6,219,591 B1. To avoid delays associated with the recursive least squares technique, an alternative tracking technique separately updates the power generating part's Thevenin equivalent voltage and impedance. S. Corsi and G. N. Taranto, "A real-time voltage instability identification algorithm based on local phasor measurements," IEEE Trans. Power Syst., vol. 23, no. 3, pp. 1271-1279, August 2008.

**SUMMARY**

According to the present invention there is provided a method according to claim 1. Further there is provided an apparatus according to claim 11. Additional features of the invention will be appreciated from the dependent claims and the discussion herein.

One or more embodiments herein track the Thevenin equivalent of a power generating part of a power system with improved accuracy as compared to known tracking techniques. This improved accuracy advantageously prevents or at least mitigates false alarms in terms of prematurely detecting transmission corridor voltage instability.

More particularly, embodiments herein include a method of monitoring voltage stability of a transmission corridor through which power flows between different parts of a power system. The method is implemented by a voltage stability monitoring apparatus. The method includes monitoring an equivalent load impedance at an interface between the transmission corridor and a part of the power system designated as generating the power. The equivalent load impedance at this "power generating part" interface comprises a ratio of a voltage phasor at the interface to a current phasor at the interface.

The method further includes tracking a Thevenin equivalent voltage and impedance of the designated part by separately updating that voltage and impedance. Updating the Thevenin equivalent voltage in this regard comprises updating the voltage to reflect the magnitude of any changes in the voltage phasor that are associated with large variations in the magnitude of the equivalent load impedance at the power generating part interface. Such large variations include variations greater than a threshold-defined variation.

The method finally includes computing an index indicating the voltage stability as a function of the tracked Thevenin equivalent voltage and impedance.

In at least some embodiments, updating the Thevenin equivalent voltage comprises, for each of a plurality of phasor measurement times, determining whether or not variation in the magnitude of the equivalent load impedance at the power generating part interface since a previous phasor measurement time is greater than the threshold-defined variation. If so, the method comprises adjusting the Thevenin equivalent voltage computed for the previous phasor measurement time by the magnitude of the change in the voltage phasor since that previous phasor measurement time.

Thevenin equivalent voltage in some embodiments is also updated responsive to small variations in the magnitude of the equivalent load impedance at the power generating part interface. Specifically, the Thevenin equivalent voltage is decreased or increased by a predefined percentage change when those small variations do or do not have the same polarity as variations in the Thevenin equivalent impedance, respectively. Such small variations include variations less than the threshold-defined variation.

In some embodiments, updating the Thevenin equivalent voltage comprises updating the Thevenin equivalent voltage's complex value in rectangular coordinates. Alternatively or additionally, the method includes dynamically adjusting a threshold defining the threshold-defined variation, as a function of the Thevenin equivalent voltage.

Additionally, in one or more embodiments, updating the Thevenin equivalent impedance comprises solving a set of two linear equations with two unknown variables. These two unknown variables comprise the real and imaginary parts of the Thevenin equivalent impedance. Known variables in the set of two linear equations include the real and imaginary parts of the Thevenin equivalent voltage, as updated to reflect the magnitude of any changes in the voltage phasor at the power generating part interface.

Still further, the method in some embodiments entails dynamically adapting which part of the power system is designated as generating the power. Such dynamic adaptation is performed responsive to detecting a change in direction or magnitude of power flowing through one or both interfaces between the transmission corridor and the parts of the power system.

Finally, in one or more embodiments, the method involves monitoring whether a breaker for each line associated with the power generating part interface is open or closed. In this case, monitoring the equivalent load impedance at that interface comprises dynamically computing the equivalent load impedance at the interface exclusively from phasor measurements taken at lines whose breakers are closed. In some of these embodiments, responsive to detecting the opening or closing of one or more of these breakers, the method entails updating the Thevenin equivalent voltage to reflect the magnitude of the resulting change in the voltage phasor, as dynamically computed, without re-initializing the Thevenin equivalent voltage.

Embodiments herein further include a voltage stability monitoring apparatus configured to perform the above-described method.

Of course, the present invention is not limited to the above features and advantages. Indeed, those skilled in the art will recognize additional features and advantages upon reading the following detailed description, and upon viewing the accompanying drawings.

**BRIEF DESCRIPTION OF THE DRAWINGS**

Figure 1 is a block diagram of a power system and a voltage stability monitoring apparatus according to one or more embodiments.

Figure 2 is a logic flow diagram of a method implemented by a voltage stability monitoring apparatus according to one or more embodiments.

Figure 3 is a schematic diagram of a circuit model of the power system according to one or more embodiments.

Figure 4 is a logic flow diagram of a process for tracking the equivalent load impedance at the power generating part interface and for updating the Thevenin equivalent voltage at that interface, according to one or more embodiments.

Figure 5 is a schematic diagram of a power system circuit model which illustrates the equivalent load impedance at the power generating part interface, according to one or more embodiments.

Figure 6 is a schematic diagram of a power system circuit model which illustrates modeling the transmission corridor as a T-equivalent circuit, according to one or more embodiments.

Figure 7 is a schematic diagram of a power system circuit model which illustrates modeling the combined generation-transmission parts of the system as a Thevenin equivalent circuit, according to one or more embodiments.

Figure 8 shows an exemplary transmission corridor for accounting for structural changes within the corridor, according to one or more embodiments.

Figure 9 shows exemplary scenarios for dynamically adapting which part of the power system is designated as the power generating part as a function of aggregate active power, according to one or more embodiments.

Figure 10A illustrates an exemplary corridor.

Figures 10B-C illustrate quantitative advantages of accounting for structural changes within the exemplary corridor of Figure 10A, according to one or more embodiments, with Figure 10B illustrating these advantages in terms of a ratio of impedance and Figure 10C illustrating the advantages in terms of reactive power margin.

Figure 11A illustrates a different exemplary corridor.

Figures 11B-C illustrate quantitative advantages of dynamically adapting which part of the exemplary corridor of Figure 11A is designated as the power generating part, according to one or more embodiments, with Figure 11B illustrating these advantages in terms of a ratio of impedance and Figure 11C illustrating the advantages in terms of reactive power margin.

## DETAILED DESCRIPTION

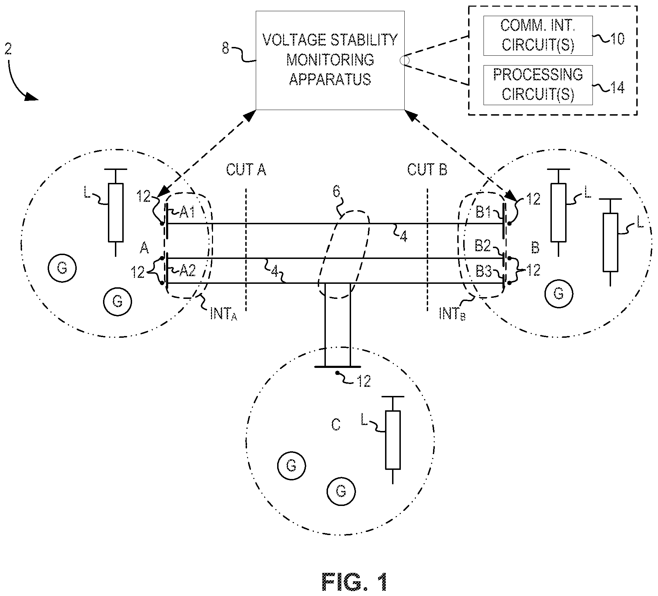

Figure 1 illustrates a power system 2 according to one or more embodiments. The power system 2 generates electric power at one part of the system 2 and transmits that power via one or more transmission lines 4 for use by another part of the system 2. As shown, for example, parts A, B, and C of the power system 2 are each characterized by some degree of power generation (G) and loading (L). But power in the aggregate flows in a direction from part A towards part B via the one or more transmission lines 4. Regardless of the actual power flow direction, though, such characterization of the power system 2 into different parts effectively means that different transfer cuts A and B define a (virtual) transmission corridor 6 between those parts.

The transmission corridor 6 is composed of the one or more physical transmission lines 4 via which power flows between the power system parts. Figure 1 shows these transmission lines 4 interface parts A and B of the power system 2 at physical buses A1-A2 and B1-B3. This means that the corridor 6 interfaces parts A and B at interfaces $Int_A$ and $Int_B$. As shown, interface $Int_A$ is a virtual bus comprising a group of physical buses A1-A2. Likewise, interface $Int_B$ as shown is a virtual bus comprising a group of physical buses B1-B3.

The transmission corridor 6 is considered to be stable in terms of voltage if the corridor 6 maintains steady acceptable voltages not only under normal operating conditions but also after a disturbance to the system 2 (e.g., a line outage). A voltage stable corridor therefore regains acceptable voltages after a disturbance, rather than oscillating or monotonically decreasing even in response to attempted voltage restoration mechanisms.

A voltage stability monitoring apparatus 8 is configured to monitor the voltage stability of the transmission corridor 6, in order to detect in real-time the proximity of the corridor 6 to voltage instability. The apparatus 8 in this regard comprises one or more communication interface circuits 10 configured to communicatively couple the apparatus 8 to a plurality of time synchronized phasor measurement units (PMUs) 12 deployed at both ends of the corridor 6. Any given PMU 8 deployed at an interface between the corridor 6 and a part of the system 2 measures a voltage phasor and/or a current phasor locally at that interface, and communicates those phasor measurements to the apparatus 8 (e.g., at a rate of 10-120 samples per second). For example, PMUs 12 deployed at $Int_A$ measure voltage phasors at and current phasors in transmission lines 4 associated with physical buses A1-A2.

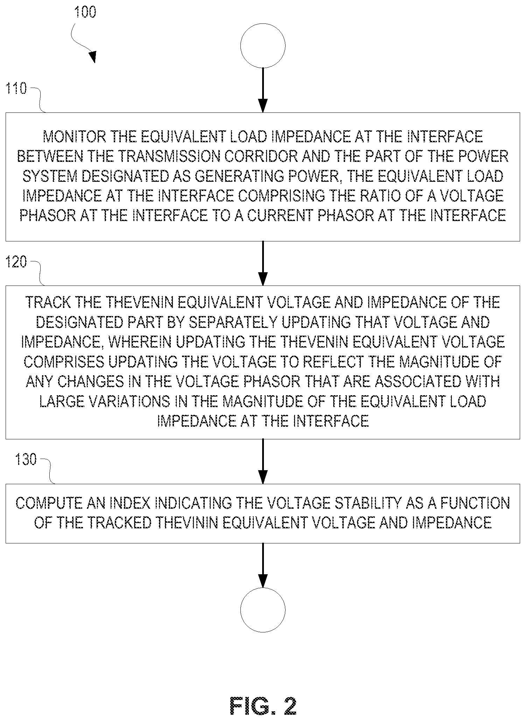

The voltage stability monitoring apparatus 8 also comprises one or more processing circuits 14 configured to use the received phasor measurements to compute an index indicating the corridor's voltage stability. The one or more processing circuits 14 do so according to the processing 100 illustrated in Figure 2.

As shown in Figure 2, processing 100 by the one or more processing circuits 14 includes monitoring an equivalent load impedance at an interface $Int_g$ between the transmission corridor 6 and a part of the power system designated as generating said power (e.g., $Int_A$ in Figure 1) (Block 110). This interface $Int_g$ is also referred to herein as the "power generating part interface" for convenience. The equivalent load impedance at this interface $Int_g$ comprises a ratio of a voltage phasor at the interface $Int_g$ to a current phasor at the interface $Int_g$. In at least some embodiments, these voltage and current phasors at the interface $Int_g$ are computed from the voltage and current phasor measurements received from the one or more PMUs 12 deployed at the one or more physical buses which collectively form that interface $Int_g$. Regardless, the equivalent load impedance at interface $Int_g$ as used herein characterizes the load "seen" by interface $Int_g$ and therefore characterizes both the transmission corridor 6 and the power receiving part of the system 2.

Processing 100 by the one or more processing circuits 14 further includes tracking a Thevenin equivalent voltage and impedance of the designated power generating part, by separately updating that voltage and impedance (Block 120). As used herein, separately updating the Thevenin equivalent voltage and impedance means updating the Thevenin equivalent voltage separately from updating the Thevenin equivalent impedance, rather than jointly updating both the voltage and impedance by simultaneously solving for them. Notably, updating the Thevenin equivalent voltage comprises updating the voltage to reflect the magnitude of any changes in the voltage phasor at the interface $Intg$ that are associated with large variations in the magnitude of the equivalent load impedance at the interface $Int_g$. Large variations in this regard include variations greater than a threshold-defined variation.

Processing 100 finally includes computing an index indicating the corridor's voltage stability as a function of the tracked Thevenin equivalent voltage and impedance (Block 130). This index as used herein comprises any indicator that quantifies the transmission corridor's proximity to voltage instability. With the corridor's voltage stability quantified in this way, actions can be taken as needed to control the corridor's stability and/or mitigate system degradation or disturbance propagation. In some embodiments, for example, processing 100 further comprises automatically performing a prescribed action based on the index. In other embodiments, processing 100 just comprises displaying the index, e.g., to system operators that initiate control and/or protective actions as they deemed appropriate.

In any event, regardless of the particular form of the index, computing the index as described advantageously prevents or at least mitigates false alarms in terms of prematurely detecting transmission corridor voltage instability. This is because the Thevenin equivalent voltage and impedance of the designated power generating part are tracked more accurately as compared to known approaches. Indeed, rather than assigning any variation in the magnitude of the equivalent load impedance at the interface $Int_g$ to the Thevenin equivalent impedance, embodiments herein selectively assign variations in that magnitude which are deemed large to the Thevenin equivalent voltage instead. Such more accurately reflects the fact that these large variations are attributable to otherwise unmeasured changes in the designated power generating part (e.g., switching shunt capacitors on or off, generators hitting their reactive power limits, line outages, etc.), as distinguished from changes in local load.

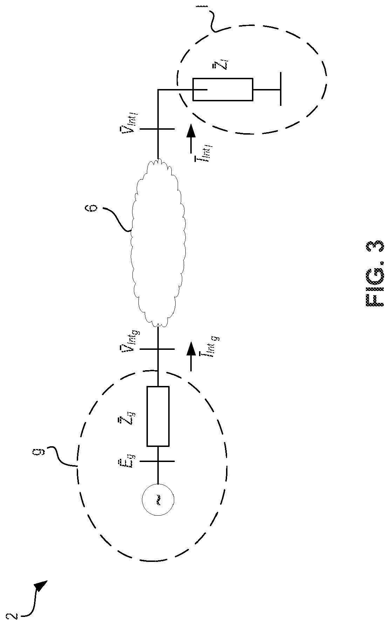

Figure 3 illustrates additional details about how the voltage stability monitoring apparatus 8 tracks the Thevenin equivalent voltage and impedance according to one or more embodiments. As shown, the voltage stability monitoring apparatus 8 models the power system 2 as including a power generating part g (e.g., part A in Figure 1), a power receiving (i.e., load) part $l$ (e.g., part B in Figure 1), and a transmission corridor 6 that interfaces part g at a power generating part interface $Int_g$ and that interfaces part $l$ at a power receiving part interface $Int_l$. The apparatus 8 further models the power generating part g in terms of its Thevenin equivalent voltage $\overline{E}_g$ and impedance $\overline{Z}_g$, and models the power receiving part $l$ in terms of its equivalent load impedance $\overline{Z}_l$. The apparatus 8 tracks $\overline{E}_g$ and $\overline{Z}_g$ based exclusively on a voltage phasor $\overline{V}_{Int_g}^i$ and a current phasor $\overline{I}_{Int_g}^i$ at interface $Int_g$, and tracks $\overline{Z}_l$ based exclusively on a voltage phasor $\overline{V}_{Int_l}^i$ and a current phasor $\overline{I}_{Int_l}^i$ at interface $Int_l$.

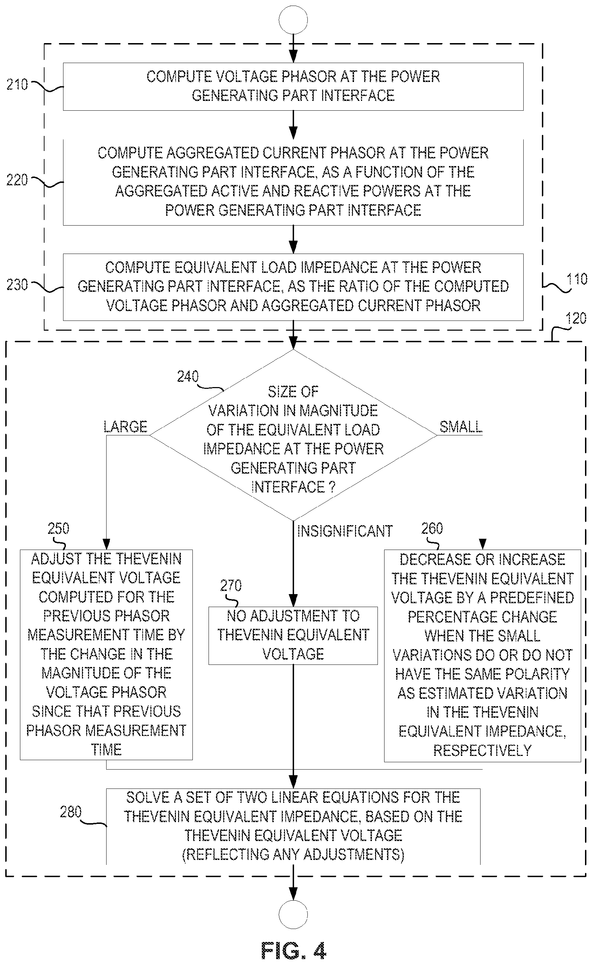

Figure 4 illustrates processing performed by the apparatus 8 to track $\overline{E}_g$ and $\overline{Z}_g$ in this way, according to one or more embodiments (different with respect to US Patent No. 7,200,500 B2, April 2007). Figure 4's processing is performed for each of a plurality of phasor measurement times $i = 0,1, ..., N$; that is, for each time $i$ a synchronized measurement sample is received from the one or more PMUs 12 deployed at interface $Int_g$. A measurement sample received from a given PMU 12 deployed at interface $Int_g$ includes voltage phasors $\overline{V}_{Int_g}^i$ measured at and current phasors $\overline{I}_{Int_g}^i$ measured in transmission lines associated with interface $Int_g$. Of course, $\overline{E}_g$ must be initialized at the start of Figure 4's processing. By considering $\overline{E}_g$ in rectangular coordinates (described by its real and imaginary parts) and taking voltage $\overline{V}_{Int_g}^i$ as reference (setting its imaginary part to zero), $\overline{E}_g$ is initialized as::

$$E_{g,R}^0 = V_{Int_g}^0; \quad E_{g,I}^0 = \sqrt{\left(\frac{Z_s^0 I_{Int_g}^0 - V_{Int_g}^0}{2}\right)^2 - \left(V_{Int_g}^0\right)^2} \qquad (1)$$

where $Z_s^0 = \frac{V_{Int_g}^0}{I_{Int_g}^0}$, $R$ indicates real and $I$ imaginary part of complex Thevenin voltage $\overline{E}_g$.

Regardless, as shown, the apparatus 8 computes a voltage phasor $\overline{V}_{Int_g}^i$ at interface $Int_g$ for measurement time $i$ (Block 210). The apparatus computes $\overline{V}_{Int_g}^i$ in at least some embodiments as:

$$\overline{V}_{Int_g}^i = \frac{\sum_{c \in Int_g} P_c^i \overline{V}_{Int_g,c}^i}{\sum_{c \in Int_g} P_c^i} \qquad (2)$$

where $P_c^i$ is the power transfer through transmission line c at measurement time *i*. The apparatus 8 also computes an aggregated current phasor $\overline{I}_{Int_g}^i$ at interface *Int_g* for measurement time *i* (Block 220). In at least some embodiments, the apparatus 8 computes $\overline{I}_{Int_g}^i$ as a function of the aggregated active and reactive powers at interface *Int_g*. In this case, the apparatus 8 computes $\overline{I}_{Int_g}^i$ as:

$$\overline{I}_{Int_g}^i = \left( \frac{P_{Int_g}^i + jQ_{Intg}^i}{\overline{V}_{Int_g}^i} \right)^*$$

(3)

where

$$P_{Int_g}^i = \sum_{c \in Int_g} P_c^i$$

(4)

$$Q_{Int_g}^i = \sum_{c \in Int_g} Q_c^i$$

(5)

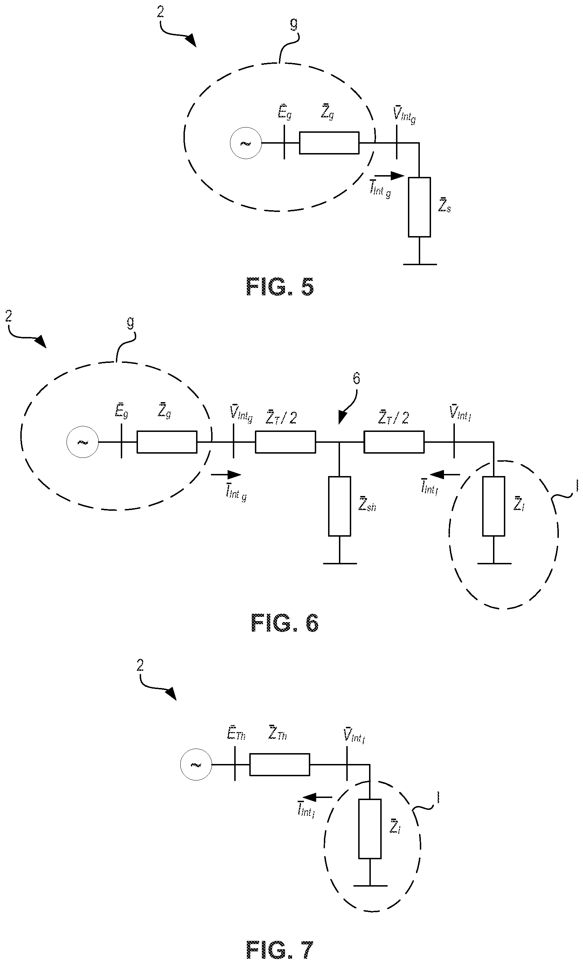

Regardless, the apparatus 8 then computes an equivalent load impedance $\overline{Z}_s^i$ at interface *Intg* for measurement time *i* (Block 230). As modeled in Figure 5, the equivalent load impedance $\overline{Z}_s$ is the load "seen" by interface *Int_g* (in the direction away from the power generating part *g*). Accordingly, for the current measurement time *i*, the apparatus 8 according to one or more embodiments computes the equivalent load impedance $\overline{Z}_s^i$ at interface *Intg* as:

$$\overline{Z}_s^i = \frac{\overline{V}_{Int_g}^i}{\overline{I}_{Int_g}^i}$$

(6)

Having computed $\overline{Z}_s^i$, the apparatus 8 tracks $\overline{E}_g$ and $\overline{Z}_g$ by computing $\overline{E}_g^i$ and $\overline{Z}_g^i$ for the current measurement time *i* in different ways depending on how much the magnitude of $\overline{Z}_s$ has varied since the previous measurement time *i* -1. Specifically, the apparatus 8 determines the size of the variation in the magnitude of $\overline{Z}_s$, as $\left| \left| \overline{Z}_s^i \right| - \left| \overline{Z}_s^{i-1} \right| \right|$ (Block 240). The apparatus 8 is configured to deem the size of this variation as "large" if the size of the variation is greater than a threshold-defined variation. In at least some embodiments, this threshold-defined variation is a predefined percentage variation since the previous measurement time *i* -1, defined as $\varepsilon_1 \times \left| \overline{Z}_s^{i-1} \right|$. As an example, the threshold $\varepsilon_1$ may have a value in the range from 0.01 to 0.05. On the other hand, the apparatus 8 is configured to deem the size of the variation as "small" if the size of the variation is less than the threshold-defined variation. That said, in least some embodiments, the apparatus 8 deems particularly small variations as "insignificant" variations that do not justify updating $\overline{E}_g$. Insignificant variations in this case are deemed to be variations that are less than a second threshold-defined variation. Such second threshold-defined variation may be a second predefined percentage variation since the previous measurement time *i* -1, defined as $\varepsilon_2 \times \left| \overline{Z}_s^{i-1} \right|$. As an example, the threshold $\varepsilon_2$ may have a value in the range from 0.00005 to 0.001.

In at least some embodiments, the apparatus 8 dynamically adjusts the threshold defining the first and/or the second threshold-defined variation, as a function of the Thevenin equivalent voltage $\overline{E}_g$. That is, the apparatus 8 dynamically adjusts $\varepsilon_1$ and/or $\varepsilon_2$ as a function of $\overline{E}_g$. In one embodiment, for example, the apparatus 8 dynamically decreases

$\varepsilon_1$ and $\varepsilon_2$ responsive to increases in $\overline{E}_g$.

Irrespective of these details, if the apparatus 8 deems the size of the variation in the magnitude of $\overline{Z}_s$ as "large", the apparatus 8 adjusts imaginary part of the Thevenin equivalent voltage computed for the previous phasor measurement time (i.e., $E_{g,l}^{i-1}$) by the magnitude of the change in voltage phasor $\overline{V}_{Int_g}$ at interface $Int_g$ since that previous phasor measurement time (i.e., by $\left| \overline{V}_{Int_g}^{i} - \overline{V}_{Int_g}^{i-1} \right|$) (Block 250) (real part of the Thevenin equivalent voltage is set to $E_{g,R}^{i} = V_{Int_g}^{i}$). In at least some embodiments, the apparatus 8 updates $\overline{E}_g$ in this way by updating the complex value $\overline{E}_g$ in rectangular coordinates (real and imaginary parts), as opposed to separately updating the magnitude and angle of the complex value $\overline{E}_g$. In this case, the apparatus 8 computes imaginary part of the Thevenin equivalent voltage $E_{g,l}^{i}$ for the current phasor measurement time $i$ as:

$$ E_{g,I}^{i} = E_{g,I}^{i-1} \left( 1 + \left| \overline{V}_{Int_g}^{i} - \overline{V}_{Int_g}^{i-1} \right| \right) \qquad (7) $$

By contrast, if the apparatus 8 deems the size of the variation in the magnitude of $\overline{Z}_s$ as "small", the apparatus 8 increases or decreases imaginary part of the Thevenin equivalent voltage computed for the previous phasor measurement time (i.e., $E_{g,l}^{i-1}$) by a predefined percentage change (Block 260). In some embodiments, for instance, the predefined percentage change is $\left| E_{g,l}^{i-1} \times k \right|$, where k is a pre-specified parameter configured to constrain tracking error within predefined bounds. As an example, $k$ may have a value in the range from 0.01 to 0.0001, with $k$ being set as higher within this range for a certain number of initial measurement sample times (e.g., until $i = 100$) and being set as lower within the range thereafter. Regardless, the apparatus 8 decreases $E_{g,l}^{i-1}$ by the predefined percentage change when the variation in the magnitude of $\overline{Z}_s$ (i.e., $\left| \overline{Z}_s^{i} \right| - \left| \overline{Z}_s^{i-1} \right|$ has the same polarity as estimated variation in the Thevenin equivalent impedance $\overline{Z}_g$ (i.e., $\left| \overline{Z}_g^{i\,*} \right| - \left| \overline{Z}_g^{i-1} \right|$, with $\overline{Z}_g^{i\,*}$ being an estimate or intermediate evaluation of $\overline{Z}_g^{i}$ that takes into account the present value of $\overline{V}_{Int_g}$ and $\overline{I}_{Int_g}$ and the previous value of $\overline{E}_g$). Conversely, the apparatus 8 increases $E_{g,l}^{i-1}$ by the predefined percentage change when $\left| \overline{Z}_s^{i} \right| - \left| \overline{Z}_s^{i-1} \right|$ does not have the same polarity as $\left| \overline{Z}_g^{i\,*} \right| - \left| \overline{Z}_g^{i-1} \right|$.

Similarly to the case for largely sized variations, the apparatus 8 in some embodiments updates $\overline{E}_g$ responsive to small sized variations by updating the complex value $\overline{E}_g$ in rectangular coordinates (real and imaginary parts), thus directly providing correction for both the magnitude and angle of $\overline{E}_g$. This is contrasted with known approaches that separately update the magnitude and angle of the complex value $\overline{E}_g$. Updating the complex value $\overline{E}_g$ in rectangular coordinates advantageously allows the apparatus 8 to better track $\overline{E}_g$ in the face of dynamic changes in the system. In one or more embodiments, for instance, the apparatus 8 decreases $E_{g,l}^{i-1}$ by unconditionally computing $E_{g,l}^{i}$ for the current phasor measurement time $i$ as:

$$ E_{g,I}^{i} = E_{g,I}^{i-1} \left( 1 - \left| E_{g,I}^{i-1} \times k \right| \right) \qquad (8) $$

Likewise, the apparatus 8 increases $E_{g,l}^{i-1}$ by unconditionally computing $E_{g,l}^{i}$ for the current phasor measurement time $i$ as:

$$ E_{g,I}^{i} = E_{g,I}^{i-1} \left( 1 + \left| E_{g,I}^{i-1} \times k \right| \right) \qquad (9) $$

By updating $\overline{E}_g$ according to equations (8) and (9), the Thevenin equivalent tracking technique herein advantageously applies to cases when active and reactive power flows over the corridor 6 have opposite directions. This represents improvement over known Thevenin equivalent tracking approaches where such is not the case. For example, Corsi and Taranto's approach bound updates of $\overline{E}_g$ by a lower bound $\varepsilon_{inf}$ and an upper bound $\varepsilon_{sup}$. S. Corsi and G. N.

Taranto, "A real-time voltage instability identification algorithm based on local phasor measurements," IEEE Trans. Power Syst., vol. 23, no. 3, pp. 1271-1279, August 2008. But the lower bound $\varepsilon_{\text{inf}}$ is valid only if the active and reactive power flows have the same direction. And the upper bound $\varepsilon_{\text{sup}}$ is valid only at the voltage instability point (maximum deliverable power). According to one or more embodiments, therefore, decreasing $E_{g,I}^{i-1}$ by unconditionally computing $E_{g,I}^{i}$ according to equation (8) and increasing $E_{g,I}^{i-1}$ by unconditionally computing $E_{g,I}^{i}$ according to equation (9) means that the apparatus 8 does not condition the amount by which $E_{g,I}^{i-1}$ is decreased or increased on the value of Corsi and Taranto's lower and upper bounds $\varepsilon_{\text{inf}}$, $\varepsilon_{\text{sup}}$.

Finally, if the apparatus 8 deems the size of the variation in the magnitude of $\overline{Z}_s$ as "insignificant", the apparatus 8 does not adjust the Thevenin equivalent voltage $\overline{E}_g$ (Block 270). That is, the apparatus 8 simply computes imaginary part of the Thevenin equivalent voltage $E_{g,I}^{i}$ for the current phasor measurement time $i$ as:

$$\text{E}_{g,I}^{i} = \text{E}_{g,I}^{i-1} \qquad (10)$$

Irrespective of how the apparatus 8 updates the Thevenin equivalent voltage $\overline{E}_g$, the apparatus 8 then updates the Thevenin equivalent impedance $\overline{Z}_g$ separately; that is, rather than jointly updating $\overline{E}_g$ and $\overline{Z}_g$ for the current measurement time $i$ by simultaneously solving for $\overline{E}_g$ and $\overline{Z}_g$, the apparatus 8 first updates $\overline{E}_g$ without updating $\overline{Z}_g$ and then updates $\overline{Z}_g$ based on the updated $\overline{E}_g$. One or more embodiments herein are indifferent to the method the Thevenin equivalent impedance $\overline{Z}_g$ is updated. In embodiments shown in Figure 4, though, the apparatus 8 updates the Thevenin equivalent impedance $\overline{Z}_g$ by solving a set of two linear equations for $\overline{Z}_g$, based on the Thevenin equivalent voltage $\overline{E}_g$ (as updated / adjusted for the current measurement time) (Block 280).

Specifically, the apparatus 8 solves:

$$y_i = H_i^T x_i \qquad (11)$$

$$y_i = \begin{bmatrix} V_{Int_g,R}^{i} - E_{g,R}^{i} \\ V_{Int_g,I}^{i} - E_{g,I}^{i} \end{bmatrix} \qquad (12)$$

$$x_i = \begin{bmatrix} R_g^{i} \\ X_g^{i} \end{bmatrix} \qquad (13)$$

$$H_i^T = \begin{bmatrix} -I_{Int_g,R}^{i} & I_{Int_g,I}^{i} \\ -I_{Int_g,I}^{i} & -I_{Int_g,R}^{i} \end{bmatrix} \qquad (14)$$

where $R_g^{i} + jX_g^{i}$ as the real and imaginary parts of $\overline{Z}_g^{i}$ are the two unknown variables for which the apparatus 8 solves the set of equations, and where $E_{g,R}^{i}$ and $E_{g,I}^{i}$ as the real and imaginary parts of $E_g^{i}$, $V_{Int_g,R}^{i}$ and $V_{Int_g,I}^{i}$ as the real and imaginary parts of $V_{Int_g}^{i}$, and $I_{Int_g,R}^{i}$ and $I_{Int_g,I}^{i}$ as the real and imaginary parts of $I_{Int_g}^{i}$ are known variables. Real part of the Thevenin equivalent voltage is set to $E_{g,R}^{i} = V_{Int_g}^{i}$. Computing Thevenin equivalent impedance $\overline{Z}_g$ in this way does not involve assuming that equivalent reactive is negligible. Unlike Corsi and Taranto's approach which makes this assumption, therefore, the Thevenin equivalent tracking approach herein advantageously extends to lower voltage levels where this assumption does not hold.

Updating the Thevenin equivalent voltage $\overline{E}_g$ and impedance $\overline{Z}_g$ as described above more accurately accounts for the impact that the power generating part g of the system 2 has on the stability conditions of the transmission corridor 6. Indeed, changes in such stability conditions are caused either by (A) changes in the power receiving (i.e., load) part *l* ; or (B) changes in the power generating part g not directly measured by available measurements (e.g., switching shunt capacitors on or off, generators hitting their reactive power limits, line outages, etc.). If changes in the equivalent load impedance $\overline{Z}_l$ of the power receiving part *l* are only accompanied by changes in the current $\overline{I}_{Int_g}$ at the power generating part interface $Int_g$, without large changes in the voltage $\overline{V}_{Int_g}$ at that interface $Int_g$, those changes should be account for with updates to the equivalent load impedance $\overline{Z}_l$. The Thevenin equivalent voltage $\overline{E}_g$ of the power generating part g should only be updated to reflect small changes in the system 2 (i.e., according to equations (8) and (9)). The apparatus 8 detects that this scenario applies when the apparatus 8 detects relatively small variations in the magnitude of the equivalent load impedance $\overline{Z}_s$ at interface $Int_g$. On the other hand, if changes in the equivalent load impedance $\overline{Z}_l$ of the power receiving part *l* are accompanied by changes in the current $\overline{I}_{Int_g}$ at the power generating part interface $Int_g$, as well as by large changes in the voltage $\overline{V}_{Int_g}$ at that interface $Int_g$, those changes should be account for updates to the Thevenin equivalent voltage $\overline{E}_g$ of the power generating part g (according to equation (7)). The apparatus 8 detects that this scenario applies when the apparatus 8 detects relatively large variations in the magnitude of the equivalent load impedance $\overline{Z}_s$ at interface $Int_g$.

Regardless of these additional details for tracking the Thevenin equivalent voltage $\overline{E}_g$ and impedance $\overline{Z}_g$ of the power generating part g, the apparatus 8 herein of course computes an index indicating the voltage stability of the corridor 6 as a function of that tracked voltage $\overline{E}_g$ and impedance $\overline{Z}_g$ (Block 130 of Figure 2). In at least some embodiments, the apparatus 8 computes this index also as a function of the T-equivalent of the corridor 6. Figure 6 shows an example of such embodiments.

In Figure 6, the apparatus 8 computes the T-equivalent of the corridor 6 based exclusively on the voltage phasor $\overline{V}_{Int_g}$ and current phasor $\overline{I}_{Int_g}$ at interface $Int_g$ and on the voltage phasor $\overline{V}_{Int_l}$ and current phasor $\overline{I}_{Int_l}$ at interface $Int_l$. Specifically, the apparatus 8 computes the T-equivalent represented in Figure 6 by the complex impedances $\overline{Z}_T$ and $\overline{Z}_{sh}$ as:

$$\overline{Z}_T = 2\left(\frac{\overline{V}_{Int_g} - \overline{V}_{Int_l}}{\overline{I}_{Int_g} - \overline{I}_{Int_l}}\right) \tag{15}$$

$$\overline{Z}_{sh} = \frac{\overline{V}_{Int_g}\overline{I}_{Int_l} - \overline{V}_{Int_l}\overline{I}_{Int_g}}{\left(\overline{I}_{Int_l}\right)^2 - \left(\overline{I}_{Int_g}\right)^2} \tag{16}$$

Note that the apparatus 8 computes the T-equivalent in this way based exclusively on phasor measurements for a current measurement time *i*, meaning that the computation is advantageously performed without delay.

Having computed the T-equivalent in this way, the apparatus 8 in these embodiments proceeds by computing the Thevenin equivalent of the combination of the power generating part *g* and the transmission corridor 6, as shown in Figure 7. Specifically in this regard, the apparatus 8 computes the Thevenin equivalent impedance $\overline{Z}_{th}$ of the combined generating part g and corridor 6 as:

$$\overline{Z}_{th} = \frac{\overline{Z}_T}{2} + \frac{1}{\dfrac{1}{\overline{Z}_{sh}} + \dfrac{2}{\overline{Z}_T + 2\overline{Z}_g}} \tag{17}$$

The apparatus 6 then computes the Thevenin equivalent voltage $\overline{E}_{th}$ of the combined generating part g and corridor 6 as:

$$\overline{E}_{th} = \overline{V}_{Int_l} \left( \frac{\overline{Z}_{th} + \overline{Z}_l}{\overline{Z}_l} \right)$$

(18)

where the equivalent load impedance $\overline{Z}_l$ of the power receiving (i.e., load) part $l$ is of course:

$$\overline{Z}_l = -\frac{\overline{V}_{Int_l}}{\overline{I}_{Int_l}}$$

(19)

Regardless of the particular technique for calculating the Thevenin equivalent of the combination of the power generating part g and the transmission corridor 6, the apparatus 8 in at least some embodiments uses this Thevenin equivalent in order to express the voltage stability index directly or indirectly in terms of the system's maximum deliverable power. The system's maximum deliverable power in this regard is reached when the magnitude of the Thevenin equivalent impedance $\overline{Z}_{th}$ of the combined generation and transmission parts of the system 2 equals the magnitude of the equivalent load impedance $\overline{Z}_l$ of the power receiving part: $|\overline{Z}_{Th}| = |\overline{Z}_l|$. The apparatus 8 is configured to compute any stability index that exploits this relation, such as a ratio of equivalent and load impedances, and reactive power margin (active, reactive, apparent).

One or more embodiments compute this voltage stability index according to the method of Figure 2 in order to not only realize the advantages described above but to also more accurately account for structural changes within the transmission corridor 6. Specifically, the apparatus 8 in such embodiments monitors whether a breaker for each line 4 associated with the power generating part interface $Int_g$ is open or closed. The apparatus 8 exploits this breaker monitoring in order to improve its monitoring of the equivalent load impedance $\overline{Z}_s$ at the power generating part interface $Int_g$. The apparatus 8 in this regard dynamically computes $\overline{Z}_s$ exclusively from phasor measurements taken at lines 4 whose breakers are closed.

Where the apparatus 8 computes $\overline{Z}_s$ according to equations (2)-(6), for example, the apparatus 8 excludes from consideration (and effectively "removes" from the corridor 6) transmission lines $c \in Int_g$ that are flagged as having open breakers. In at least some embodiments, the apparatus 8 receives signals indicating the status of line breakers from phasor measurement units deployed for those lines and dynamically flags lines that have open breakers and that therefore should be excluded from the corridor 6. Effectively "re-computing" the structure of the corridor 6 responsive to line breaker status in this way advantageously prevents zero-valued phasor measurements at open lines from introducing inaccuracies in computation of $\overline{Z}_s$ (different with respect to US Patent No. 7,200,500 B2, April 2007).

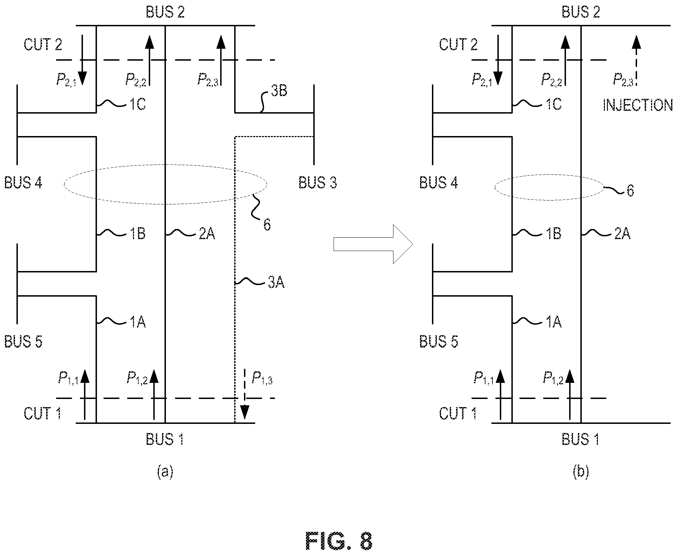

In one or more embodiments, the apparatus 8 not only accounts for structural changes within the corridor 6 that result in the opening of a whole transmission path, but also that result in the opening of a part of a transmission path. Consider the example shown in Figure 8.

As shown in Figure 8(a), the structure of the transmission corridor 6 initially comprises the collection of three transmission paths 1, 2, and 3 extending between virtual cuts 1 and 2 adjacent to physical buses 1 and 2. Transmission path 1 consists of line 1A extending between physical buses 1 and 5, line 1B extending between physical buses 4 and 5, and line 1C extending between physical buses 4 and 2. Transmission path 2 just consists of line 2A extending between physical buses 1 and 2. Finally, transmission path 3 consists of line 3A extending between physical buses 1 and 3, and line 3B extending between physical buses 3 and 2. Responsive to detecting that the breaker status for line 3A has changed from closed to open, the apparatus 8 changes from computing $P_{Int_1}$ as $P_{1,1} + P_{1,2} - P_{1,3}$ to computing $P_{Int_1}$ as $P_{1,1} + P_{1,2}$. As shown in Figure 8(b), though, the apparatus 8 advantageously recognizes that the breaker status for line 3A changing to open only results in a partial opening of transmission path 3. The apparatus 8 therefore adds the remaining portion of path 3 to bus 2 as injection (here, as a positive injection given the direction of the flow of $P_{2,3}$). This means that the apparatus 8 continues to compute $P_{Int_2}$ as $P_{2,1} - P_{2,2} - P_{2,3}$ both before and after detecting the change of the breaker status for line 3A.

Intuitively, a change in the structure of the corridor 6 requires re-initialization of the Thevenin equivalent voltage $\overline{E}_g$. However, one or more embodiments herein refrain from re-initializing the Thevenin equivalent voltage $\overline{E}_g$ in this case and instead rely on updates to the Thevenin equivalent voltage $\overline{E}_g$ to accurately account for the corridor structure changes. Specifically, responsive to detecting the opening or closing of one or more breakers for lines associated with the power generating part interface $Int_g$, the apparatus 8 simply updates the Thevenin equivalent voltage $\overline{E}_g$ to reflect the magnitude of the resulting change in the voltage phasor $\overline{V}_{Int_g}$ at interface $Int_g$, as dynamically computed (to account for the corridor structure changes), without re-initializing the Thevenin equivalent voltage $\overline{E}_g$.

Those skilled in the art will appreciate that the various embodiments described herein are presented as non-limiting examples. For instance, although Figure 1 illustrates part A of the system 2 as being designated as the power generating part g, those skilled in the art will appreciate that such need not be the case. In fact, the apparatus 8 according to one or more embodiments dynamically adapts which of the parts of the system 2 is designated as the power generating part g. The apparatus 8 does so responsive to detecting a change in the direction or magnitude of power flowing through one or both interfaces between the corridor 6 and the parts of the power system 2. In some embodiments, the apparatus 8 monitors for such a change at every measurement time *i*.

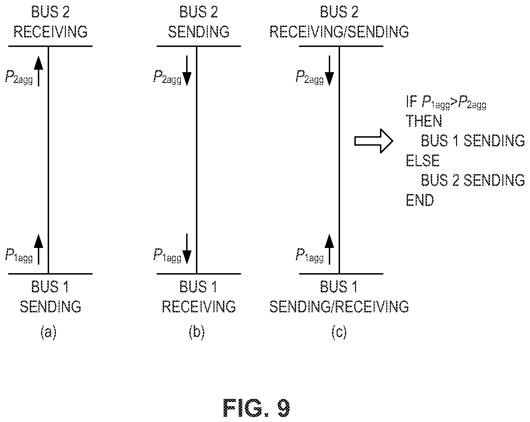

The apparatus 8 dynamically detects a power flow direction change in one or more embodiments as a function of the aggregated active power at the corridor interfaces. Aggregated active power at an interface in this sense means the algebraic sum of active power over the transmission lines associated with an interface. Consider the example shown in Figure 9 (different with respect to US Patent No. 7,200,500 B2, April 2007).

As shown in Figure 9(a), the apparatus 8 designates virtual bus 1 as the power generating part interface $Int_g$ responsive to detecting that the aggregated active power $P_{1_{agg}}$ at virtual bus 1 is positive and the aggregated active power $P_{2_{agg}}$ at virtual bus 2 is negative (where positive active power indicates power flow out of the bus and negative active power indicates power flow into the bus, as is conventional). Conversely, as shown in Figure 9(b), the apparatus 8 designates virtual bus 2 as the power generating part interface $Int_g$ responsive to detecting that the aggregated active power $P_{2_{agg}}$ at virtual bus 2 is positive and the aggregated active power $P_{1_{agg}}$ at virtual bus 1 is negative. Finally, as shown in Figure 9(c), the apparatus designates whichever virtual bus 1 or 2 has the larger aggregated active power $P_{1_{agg}}$ or $P_{2_{agg}}$ responsive to detecting that both the aggregated active power $P_{1_{agg}}$ and $P_{2_{agg}}$ at buses 1 and 2 are positive. In some embodiments, though, the apparatus 8 proceeds as shown in Figure 9(c) only upon validating the positive polarity of both aggregated active powers. Specifically, the apparatus validates that the phasor measurements used for computing the aggregated active powers were not performed over a short duration caused by fault conditions, as opposed to multi-terminal corridors with tapped configuration.

Of course, although the above embodiments have been described with reference to the direction and/or magnitude of active power flow, the embodiments apply equally to the direction and/or magnitude of reactive power flow. In fact, in at least some embodiments, the direction of active power flow and the direction of reactive power flow are assumed to be the same.

Regardless, dynamically adapting the power generating part designation in this way advantageously generalizes voltage stability index computation for application to a wide range of power system and transmission corridor types. For instance, in some embodiments the power system 2 comprises an interconnected transmission system where the power flow direction changes based on a series of operational decisions, such as market rules, the schedule of power flow, and the demand-supply chain process. Of course, embodiments are also applicable to a radial system, where power statically flows from one part to another part of the system, but in such cases there is no requirement that one part be preselected as the power generating part. Rather, changes in power flow direction are handled through a series of recursive validation of aggregated active powers at both ends of the corridor 6.

In one or more embodiments, the apparatus 8 re-initializes the Thevenin equivalent voltage $\overline{E}_g$ responsive to dynamically adapting which part of the system 2 is designated as the power generating part g. This requires a certain number of measurement samples to be used for Thevenin equivalent voltage identification.

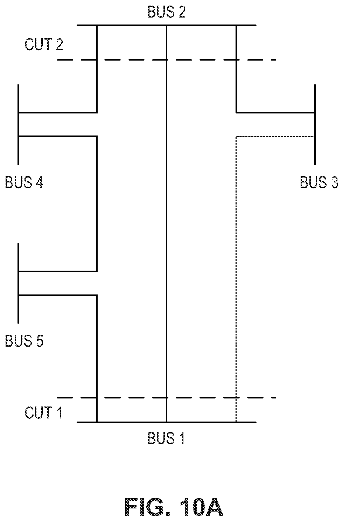

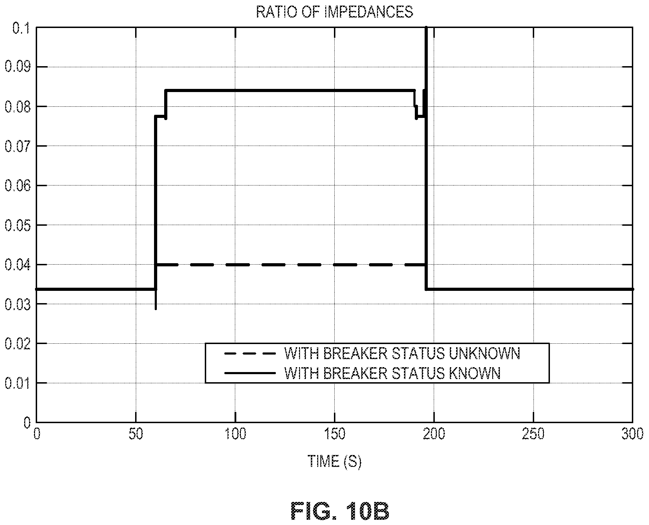

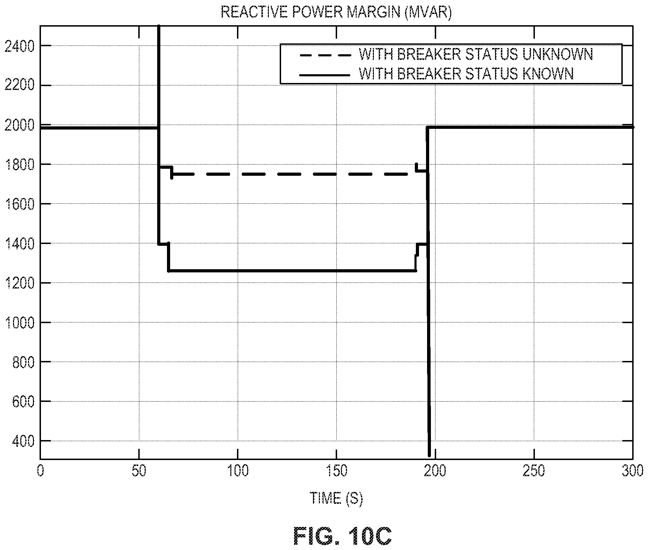

Advantages of improvements in voltage stability monitoring of transmission corridors introduced by one or more embodiments herein are illustrated using phasor measurement units recordings for the exemplary corridor shown in Figure 10A. Synchronized phasor measurements in this example are collected at the rate of 60 samples/second. The exemplary corridor shown in Figure 10A includes a line outage between buses 1 and 3 at time t=60 seconds, with the same line re-closed at time t=192 seconds. Advantages are illustrated in terms of two voltage stability indices derived from the concept of Thevenin equivalent: ratio of equivalent and load impedances, as shown in Figure 10B, and reactive power margin, as shown in Figure 10C. Time evolutions of these two indices, with and without detection and incorporation of structural change within the corridor, are given in Figures 10B and 10C. If the opened line is considered as part of the monitored corridor with measurement equal to zero (i.e., breaker status unknown), it produces errors in corridor stability conditions computation of approximately 0.3 in ratio of impedances and 400 Mvars in reactive power margin as compared to the case when the opened line, together with its counterpart line at Cut 2, is taken out from the consideration in the algorithm (breaker status known).

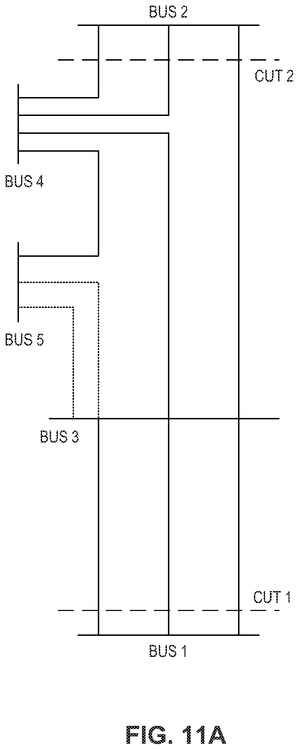

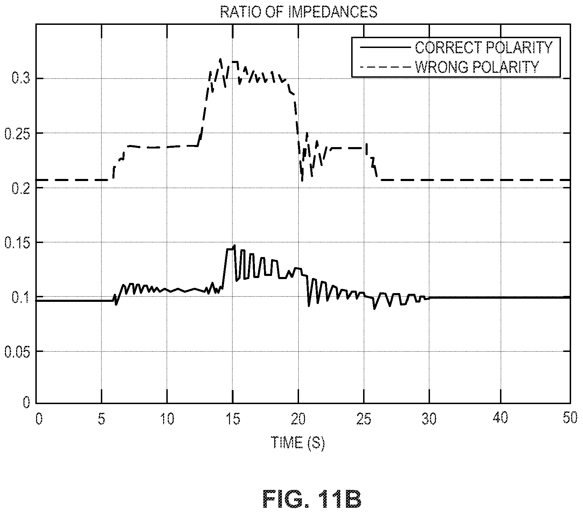

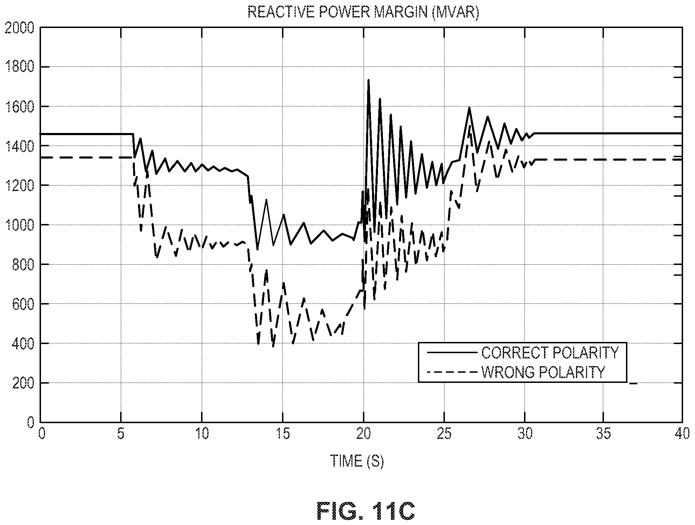

A more complicated corridor is shown in Figure 11A as another example, to demonstrate the advantages of dynamically adapting which part of the power system is designated as the power generating part. This case includes consecutive outages of two lines at t=7 second and t= 13 seconds, followed by reclosing the lines in opposite order of outages at t=20 seconds and t=25 seconds. Within the monitored corridor, these changes do not present structural changes, since they are not directly related to defined cuts of the corridor. Aggregated active powers on the cuts are such that both are directed toward the corridor, with the power at Cut 1 having the bigger value and therefore Bus 1 being designated as the power generating part. Computations introduced by one or more embodiments herein shown as being performed with correct (Bus 1 as power generating part) and wrong (Bus 2 intentionally set as power generating part) polarity. Time evolutions of two major voltage stability indices are given in Figure 11B (ratio of impedances) and Figure 11C (reactive power margin). Wrong polarity results in considerable error: approximately 0.1 in ratio of impedances and 500 Mvars (biggest error) in reactive power margin.

In view of the above, one or more embodiments herein have advantages over US Patent No. 7,200,500 B2. First, the generation area (sending end) Thevenin equivalent is identified using a specific procedure; it is not assumed as having very strong network on sending and assuming small value for its equivalent impedance that is never updated later. This offers the possibility to reflect changes in the sending area (e.g. some generator hitting the limit, switching on/off capacitor, etc.), which is not possible with the solution in the '500 patent. Second, one or more embodiments herein detect and handle changes within the corridor. In the '500 patent this is not possible and it could lead to wrong assessment of stability conditions. The '500 patent works only if the flow is from sending to receiving and fixed structure of the corridor. This feature extends embodiments herein to a much wider number of possible corridors. Third, one or more embodiments detect changes in polarity (flow direction) and change the position of the sending and receiving ends. This is contrasted, again, with the '500 patent, which works only for one flow direction for both active and reactive powers) for sending to receiving.

Those skilled in the art will appreciate that the one or more "circuits" described herein may refer to a combination of analog and digital circuits, and/or one or more processors configured with software stored in memory and/or firmware stored in memory that, when executed by the one or more processors, perform as described herein. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

**Claims**

1. A method of monitoring voltage stability of a transmission corridor (6) through which power flows between different parts of a power system (2), the method comprising the following performed by a voltage stability monitoring apparatus (8):

   tracking (120) a Thevenin equivalent voltage and impedance of a part of the power system (2) designated as generating said power, by separately updating that voltage and impedance; and
   computing (130) an index indicating said voltage stability as a function of the tracked Thevenin equivalent voltage and impedance;

   the method **characterized by:**

   monitoring (110) an equivalent load impedance at an interface between the transmission corridor (6) and said designated part, the equivalent load impedance at said interface comprising a ratio of a voltage phasor at said interface to a current phasor at said interface; and

   wherein updating the Thevenin equivalent voltage comprises updating the imaginary part of the voltage to reflect the magnitude of any changes in said voltage phasor that are associated with large variations in the magnitude of the equivalent load impedance at said interface, said large variations including variations greater than a threshold-defined variation, wherein said updating the Thevenin equivalent voltage comprises, for each of a plurality of phasor measurement times, determining (240) whether or not variation in the magnitude of the equivalent load impedance at said interface since a previous phasor measurement time is greater than the threshold-defined variation, and, if so, adjusting (250) the imaginary part of the Thevenin equivalent voltage computed for the previous phasor measurement time by the magnitude of the change in said voltage phasor since that previous phasor measurement time, wherein said adjusting comprises computing the imaginary part of the Thevenin equivalent voltage $E_{g,l}^i$ for a current phasor measurement time $i$ as $E_{g,l}^i = E_{g,l}^{i-1}\left(1 + \left|\bar{V}_{Int_g}^i - \bar{V}_{Int_g}^{i-1}\right|\right)$, where $E_{g,l}^{i-1}$ is the imaginary part of the Thevenin equivalent voltage for a previous phasor measurement time $i$-1, $\bar{V}_{Int_g}^i$ is said voltage phasor for the current phasor measurement time $i$, and $\bar{V}_{Int_g}^{i-1}$ is said voltage phasor for the previous phasor measurement time $i$-1, and wherein updating the Thevenin equivalent voltage further comprises setting the real part of the Thevenin equivalent voltage

$E_{g,R}^i$ for the current phasor measurement time $i$ as $E_{g,R}^i = V_{Int_g}^i$.

2. The method of claim 1, further **characterized by** initializing the real part of the Thevenin equivalent voltage as $E_{g,R}^0 = V_{Int_g}^0$, and initializing the imaginary part of the Thevenin equivalent voltage as

$$E_{g,I}^0 = \sqrt{\left(\frac{Z_s^0 I_{Int_g}^0 - V_{Int_g}^0}{2}\right)^2 - \left(V_{Int_g}^0\right)^2}$$, where $Z_s^0 = \frac{V_{Int_g}^0}{I_{Int_g}^0}$, where $I_{Int_g}^0$ is an initial value for said current phasor, where $V_{Int_g}^0$ is an initial value for said voltage phasor.

3. The method of any of claims 1-2, wherein updating the Thevenin equivalent impedance comprises solving a set of two linear equations with two unknown variables that comprise the real and imaginary parts of the Thevenin equivalent impedance, wherein known variables in the set of two linear equations include the imaginary part of the Thevenin equivalent voltage as updated to reflect the magnitude of any changes in said voltage phasor and the real part of the Thevenin equivalent voltage as set to said voltage phasor for a current phasor measurement time.

4. The method of any of claims 1-3, further **characterized by** dynamically adjusting a threshold defining the threshold-defined variation, as a function of the Thevenin equivalent voltage.

5. The method of any of claims 1-4, further **characterized by** dynamically adapting which of said parts of the power system (2) is designated as generating said power, responsive to detecting a change in direction or magnitude of power flowing through one or both interfaces between the transmission corridor (6) and said parts of the power system (2).

6. The method of any of claims 1-5, further **characterized by** monitoring whether a breaker for each line associated with said interface is open or closed, and wherein monitoring the equivalent load impedance at said interface comprises dynamically computing the equivalent load impedance at said interface exclusively from phasor measurements taken at lines whose breakers are closed.

7. The method of claim 6, wherein, responsive to detecting the opening or closing of one or more of said breakers, said updating comprises updating the imaginary part of the Thevenin equivalent voltage to reflect the magnitude of the resulting change in said voltage phasor, as dynamically computed, without re-initializing the imaginary part of the Thevenin equivalent voltage.

8. The method of any of claims 1-7, wherein updating the Thevenin equivalent voltage further comprises, responsive to small variations in the magnitude of the equivalent load impedance at said interface, decreasing or increasing (260) the imaginary part of the Thevenin equivalent voltage by a predefined percentage change when said small variations do or do not have the same polarity as estimated variations in said Thevenin equivalent impedance, respectively, said small variations including variations less than the threshold-defined variation.

9. The method of claim 8, wherein, responsive to small variations in the magnitude of the equivalent load impedance at said interface, increasing the imaginary part of the Thevenin equivalent voltage comprises computing the imaginary part of the Thevenin equivalent voltage as $E_{g,I}^i = E_{g,I}^{i-1}\left(1 + \left|E_{g,I}^{i-1} \times k\right|\right)$ and decreasing the imaginary part of the Thevenin equivalent voltage comprises computing the imaginary part of the Thevenin equivalent voltage as $E_{g,I}^i = E_{g,I}^{i-1}\left(1 - \left|E_{g,I}^{i-1} \times k\right|\right)$, where $E_{g,I}^i$ is the imaginary part of the Thevenin equivalent voltage for a current phasor measurement time $i$, $E_{g,I}^{i-1}$ is the imaginary part of the Thevenin equivalent voltage for a previous phasor measurement time $i$ - 1, and k is a pre-specified parameter configured to constrain tracking error within predefined bounds, and wherein updating the Thevenin equivalent voltage further comprises setting the real part of the Thevenin equivalent voltage $E_{g,R}^i$ for the current phasor measurement time $i$ as $E_{g,R}^i = V_{Int_g}^i$.

10. The method of claim 9, wherein, responsive to small variations in the magnitude of the equivalent load impedance at said interface, increasing the imaginary part of the Thevenin equivalent voltage comprises unconditionally computing the imaginary part of Thevenin equivalent voltage as $E_{g,I}^i = E_{g,I}^{i-1}\left(1 + \left|E_{g,I}^{i-1} \times k\right|\right)$ and decreasing the imaginary part of the Thevenin equivalent voltage comprises unconditionally computing the imaginary part of the Thevenin equivalent voltage as $E_{g,I}^i = E_{g,I}^{i-1}\left(1 - \left|E_{g,I}^{i-1} \times k\right|\right)$.

11. A voltage stability monitoring apparatus (8) configured to monitor voltage stability of a transmission corridor (6) through which power flows between different parts of a power system (2), the voltage stability monitoring apparatus (8) comprising one or more processing circuits (14) configured to:

    track a Thevenin equivalent voltage and impedance of said designated part by separately updating that voltage and impedance; and
    compute an index indicating said voltage stability as a function of the tracked Thevenin equivalent voltage and impedance;

    **characterized in that** the one or more processing circuits (14) are configured to:

    monitor an equivalent load impedance at an interface between the transmission corridor (6) and a part of the power system (2) designated as generating said power, the equivalent load impedance at said interface comprising a ratio of a voltage phasor at said interface to a current phasor at said interface; and

update the Thevenin equivalent voltage by updating an imaginary part of the voltage to reflect the magnitude of any changes in said voltage phasor that are associated with large variations in the magnitude of the equivalent load impedance at said interface, said large variations including variations greater than a threshold-defined variation, wherein the one or more processing circuits are configured to update the Thevenin equivalent voltage by, for each of a plurality of phasor measurement times, determining whether or not variation in the magnitude of the equivalent load impedance at said interface since a previous phasor measurement time is greater than the threshold-defined variation, and, if so, adjusting the imaginary part of the Thevenin equivalent voltage computed for the previous phasor measurement time by the magnitude of the change in said voltage phasor since that previous phasor measurement time, by computing the imaginary part of the Thevenin equivalent voltage $E_{g,I}^i$ for a current phasor measurement time $i$ as $E_{g,I}^i = E_{g,I}^{i-1}\left(1 + \left|\overline{V}_{Int_g}^i - \overline{V}_{Int_g}^{i-1}\right|\right)$, where $E_{g,I}^{i-1}$ is the imaginary part of the Thevenin equivalent voltage for a previous phasor measurement time $i$-1, $\overline{V}_{Int_g}^i$ is said voltage phasor for the current phasor measurement time $i$, and $\overline{V}_{Int_g}^{i-1}$ is said voltage phasor for the previous phasor measurement time $i$-1, and setting the real part of the Thevenin equivalent voltage $E_{g,R}^i$ for the current phasor measurement time $i$ as $E_{g,R}^i = V_{Int_g}^i$.

12. The voltage stability monitoring apparatus of claim 11, wherein the one or more processing circuits (14) are configured to initialize the real part of the Thevenin equivalent voltage as $E_{g,R}^0 = V_{Int_g}^0$, and initializing the imaginary part of the Thevenin equivalent voltage as $E_{g,I}^0 = \sqrt{\left(\dfrac{Z_s^0 I_{Int_g}^0 - V_{Int_g}^0}{2}\right)^2 - \left(V_{Int_g}^0\right)^2}$, where $Z_s^0 = \dfrac{V_{Int_g}^0}{I_{Int_g}^0}$, where $I_{Int_g}^0$ is an initial value for said current phasor, where $V_{Int_g}^0$ is an initial value for said voltage phasor.

13. The voltage stability monitoring apparatus of any of claims 11-12, wherein the one or more processing circuits (14) are configured to update the Thevenin equivalent impedance by solving a set of two linear equations with two unknown variables that comprise the real and imaginary parts of the Thevenin equivalent impedance, wherein known variables in the set of two linear equations include the imaginary part of the Thevenin equivalent voltage as updated to reflect the magnitude of any changes in said voltage phasor and the real part of the Thevenin equivalent voltage as set to said voltage phasor for a current phasor measurement time.

14. The voltage stability monitoring apparatus of any of claims 11-13, wherein the one or more processing circuits (14) are further configured to dynamically adapt which of said parts of the power system (2) is designated as generating said power, responsive to detecting a change in direction or magnitude of power flowing through one or both interfaces between the transmission corridor (6) and said parts of the power system (2).

15. The voltage stability monitoring apparatus of any of claims 11-14, wherein the one or more processing circuits (14) are further configured to monitor whether a breaker for each line associated with said interface is open or closed, and are configured to monitor the equivalent load impedance at said interface by dynamically computing the equivalent load impedance at said interface exclusively from phasor measurements taken at lines whose breakers are closed.

**Patentansprüche**

1. Verfahren zur Überwachung der Spannungsstabilität eines Übertragungskorridors (6), durch den Energie zwischen verschiedenen Teilen eines Stromversorgungssystems (2) fließt, wobei das Verfahren das Folgende umfasst, das durch eine Vorrichtung zur Überwachung der Spannungsstabilität (8) durchgeführt wird:

   Nachverfolgung (120) einer Thevenin-Äquivalentspannung und einer -Impedanz eines Teils des Stromversorgungssystems (2), der zum Generieren des Stroms designiert ist, durch getrenntes Aktualisieren dieser Spannung und Impedanz; und

   Berechnen (130) eines Index, der die Spannungsstabilität als eine Funktion der nachverfolgten Thevenin-Äquivalentspannung und -Impedanz anzeigt;

   wobei das Verfahren **durch Folgendes gekennzeichnet ist:**

   Überwachen (110) einer äquivalenten Lastimpedanz an einer Schnittstelle zwischen dem Übertragungskorridor (6) und dem designierten Teil, wobei die äquivalente Lastimpedanz an der Schnittstelle ein Verhältnis eines Spannungszeigers an dieser Schnittstelle zu einem Stromzeiger an dieser Schnittstelle umfasst; und

   wobei das Aktualisieren der Thevenin-Äquivalentspannung ein Aktualisieren des Imaginärteils der Spannung umfasst, um den Betrag aller Änderungen im Spannungszeiger widerzuspiegeln, die mit großen Abweichungen im Betrag der äquivalenten Lastimpedanz an der Schnittstelle assoziiert sind, wobei die großen Abweichungen Abweichungen beinhalten, die größer als eine durch einen Schwellenwert definierte Abweichung sind, wobei das Aktualisieren der Thevenin-Äquivalentspannung für jeden aus einer Vielzahl von Zeigermesszeitpunkten ein Ermitteln (240) umfasst, ob eine Abweichung im Betrag der äquivalenten Lastimpedanz an der Schnittstelle seit einem vorangehenden Zeigermesszeitpunkt größer als die durch den Schwellenwert definierte Abweichung ist oder nicht, und falls dies so ist, ein Anpassen (250) des Imaginärteils der für den vorangehenden Zeigermesszeitpunkt berechneten Thevenin-Äquivalentspannung durch den Betrag der Änderung im Spannungszeiger seit diesem vorangehenden Zeigermesszeitpunkt umfasst, wobei das Anpassen ein Berechnen des Imaginärteils der Thevenin-Äquivalentspannung $E_{g,I}^i$ für einen aktuellen Zeigermesszeitpunkt $i$ als $E_{g,I}^i = E_{g,I}^{i-1} \left( 1 + \left| \bar{V}_{Int_g}^i - \bar{V}_{Int_g}^{i-1} \right| \right)$ umfasst, worin $E_{g,I}^{i-1}$ der Imaginärteil der Thevenin-Äquivalentspannung für einen vorangehenden Zeigermesszeitpunkt $i$-1 ist, $\bar{V}_{Int_g}^i$ der Spannungszeiger für den aktuellen Zeigermesszeitpunkt $i$ ist und $\bar{V}_{Int_g}^{i-1}$ der Spannungszeiger für den vorangehenden Zeigermesszeitpunkt $i$-1 ist, und wobei das Aktualisieren der Thevenin-Äquivalentspannung ferner ein Setzen des Realteils der Thevenin-Äquivalentspannung $E_{g,R}^i$ für den aktuellen Zeigermesszeitpunkt $i$ als $E_{g,R}^i = V_{Int_g}^i$ umfasst.

2. Verfahren nach Anspruch 1, das ferner durch Initialisieren des Realteils der Thevenin-Äquivalentspannung als $E_{g,R}^0 = V_{Int_g}^0$ und Initialisieren des Imaginärteils der Thevenin-Äquivalentspannung als

$$E_{g,I}^0 = \sqrt{\left( \frac{Z_s^0 I_{Int_g}^0 - V_{Int_g}^0}{2} \right)^2 - \left( V_{Int_g}^0 \right)^2}$$ gekennzeichnet ist, worin $Z_s^0 = \frac{V_{Int_g}^0}{I_{Int_g}^0}$, worin $I_{Int_g}^0$ ein Anfangswert für den Stromzeiger ist, worin $V_{Int_g}^0$ ein Anfangswert für den Spannungszeiger ist.

3. Verfahren nach einem der Ansprüche 1-2, wobei das Aktualisieren der Thevenin-Äquivalentimpedanz ein Lösen eines Satzes von zwei linearen Gleichungen mit zwei unbekannten Variablen umfasst, die den Realteil und den Imaginärteil der Thevenin-Äquivalentimpedanzen umfassen, wobei bekannte Variablen im Satz der zwei linearen Gleichungen den Imaginärteil der Thevenin-Äquivalentspannung, wie er aktualisiert wurde, um den Betrag aller Änderungen im Spannungszeiger widerzuspiegeln, und den Realteil der Thevenin-Äquivalentspannung beinhalten, wie er auf den Spannungszeiger für einen aktuellen Zeigermesszeitpunkt gesetzt wurde.

4. Verfahren nach einem der Ansprüche 1-3, das ferner durch ein dynamisches Anpassen eines Schwellenwerts, der die durch einen Schwellenwert definierte Abweichung definiert, als eine Funktion der Thevenin-Äquivalentspannung gekennzeichnet ist.

5. Verfahren nach einem der Ansprüche 1-4, das ferner durch dynamisches Anpassen gekennzeichnet ist, welcher der Teile des Stromversorgungssystems (2) als den Strom generierend designiert ist, als Reaktion auf ein Erkennen einer Änderung in Richtung oder Betrag des durch eine oder beide Schnittstellen zwischen dem Übertragungskorridor (6) und den Teilen des Stromversorgungssystems (2) fließenden Stroms.

6. Verfahren nach einem der Ansprüche 1-5, das ferner durch ein Überwachen gekennzeichnet ist, ob ein Unterbrecher für jede mit der Schnittstelle assoziierte Leitung offen oder geschlossen ist, und wobei das Überwachen der äquivalenten Lastimpedanz an der Schnittstelle ein dynamisches Berechnen der äquivalenten Lastimpedanz an der Schnittstelle ausschließlich aus Zeigermessungen umfasst, die an Leitungen gemacht wurden, deren Unterbrecher geschlossen sind.

7. Verfahren nach Anspruch 6, wobei als Reaktion auf das Erkennen des Öffnens oder Schließens eines oder mehrerer der Unterbrecher das Aktualisieren ein Aktualisieren des Imaginärteils der Thevenin-Äquivalentspannung umfasst, um den Betrag der resultierenden Änderung im Spannungszeiger widerzuspiegeln, wie er dynamisch berechnet wurde, ohne den Imaginärteil der Thevenin-Äquivalentspannung neu zu initialisieren.

8. Verfahren nach einem der Ansprüche 1-7, wobei das Aktualisieren der Thevenin-Äquivalentspannung ferner als Reaktion auf kleine Abweichungen im Betrag der äquivalenten Lastimpedanz an der Schnittstelle ein Verringern oder Erhöhen (260) des Imaginärteils der Thevenin-Äquivalentspannung um eine vordefinierte prozentuelle Änderung umfasst, wenn die kleinen Abweichungen die gleiche Polarität wie geschätzte Abweichungen in der Thevenin-Äquivalentspannung aufweisen oder nicht aufweisen bzw. die kleinen Abweichungen Abweichungen beinhalten, die kleiner als die durch den Schwellenwert definierte Abweichung sind.

9. Verfahren nach Anspruch 8, wobei als Reaktion auf kleine Abweichungen im Betrag der äquivalenten Lastimpedanz an der Schnittstelle das Erhöhen des Imaginärteils der Thevenin-Äquivalentspannung ein Berechnen des Imaginärteils der Thevenin-Äquivalentspannung als $E_{g,l}^{i} = E_{g,l}^{i-1}\left(1 + \left|E_{g,l}^{i-1} \times k\right|\right)$ und das Verringern des Imaginärteils der Thevenin-Äquivalentspannung ein Berechnen des Imaginärteils der Thevenin-Äquivalentspannung als $E_{g,l}^{i} = E_{g,l}^{i-1}\left(1 - \left|E_{g,l}^{i-1} \times k\right|\right)$ umfasst, worin $E_{g,l}^{i}$ der Imaginärteil der Thevenin-Äquivalentspannung für einen aktuellen Zeigermesszeitpunkt $i$ ist, $E_{g,l}^{i-1}$ der Imaginärteil der Thevenin-Äquivalentspannung für einen vorangehenden Zeigermesszeitpunkt $i$-1 ist und $k$ ein vorab angegebener Parameter ist, der konfiguriert ist, einen Nachverfolgungsfehler innerhalb vordefinierter Grenzen einzuschränken, und wobei das Aktualisieren der Thevenin-Äquivalentspannung ferner ein Setzen des Realteils der Thevenin-Äquivalentspannung $E_{g,R}^{i}$ für den aktuellen Zeigermesszeitpunkt $i$ als $E_{g,R}^{i} = V_{Int_g}^{i}$ umfasst.

10. Verfahren nach Anspruch 9, wobei als Reaktion auf kleine Abweichungen im Betrag der äquivalenten Lastimpedanz an der Schnittstelle das Erhöhen des Imaginärteils der Thevenin-Äquivalentspannung ein unbedingtes Berechnen des Imaginärteils der Thevenin-Äquivalentspannung als $E_{g,l}^{i} = E_{g,l}^{i-1}\left(1 + \left|E_{g,l}^{i-1} \times k\right|\right)$ umfasst und das Verringern des Imaginärteils der Thevenin-Äquivalentspannung ein unbedingtes Berechnen des Imaginärteils der Thevenin-Äquivalentspannung als $E_{g,l}^{i} = E_{g,l}^{i-1}\left(1 - \left|E_{g,l}^{i-1} \times k\right|\right)$ umfasst.

11. Vorrichtung zur Überwachung der Spannungsstabilität (8), die konfiguriert ist, eine Spannungsstabilität eines Übertragungskorridors (6) zu überwachen, durch den Strom zwischen verschiedenen Teilen eines Stromversorgungssystems (2) fließt, wobei die Vorrichtung zur Überwachung der Spannungsstabilität (8) eine oder mehrere Verarbeitungsschaltkreise (14) umfasst, die konfiguriert sind:

eine Thevenin-Äquivalentspannung und -Impedanz des designierten Teils durch getrenntes Aktualisieren dieser Spannung und Impedanz nachzuverfolgen; und
einen Index zu berechnen, der die Spannungsstabilität als eine Funktion der nachverfolgten Thevenin-Äquivalentspannung und -Impedanz anzeigt;

**dadurch gekennzeichnet, dass** der eine oder die mehreren Verarbeitungsschaltkreise (14) konfiguriert sind:

eine äquivalente Lastimpedanz an einer Schnittstelle zwischen dem Übertragungskorridor (6) und einem Teil des Stromversorgungssystems (2) zu überwachen, der als den Strom generierend designiert ist, wobei die äquivalente Lastimpedanz an der Schnittstelle ein Verhältnis eines Spannungszeigers an dieser Schnittstelle zu einem Stromzeiger an dieser Schnittstelle umfasst; und

die Thevenin-Äquivalentspannung durch Aktualisieren eines Imaginärteils der Spannung zu aktualisieren, um den Betrag aller Änderungen im Spannungszeiger widerzuspiegeln, die mit großen Abweichungen im Betrag der äquivalenten Lastimpedanz an der Schnittstelle assoziiert sind, wobei die großen Abweichungen Abweichungen beinhalten, die größer als eine durch einen Schwellenwert definierte Abweichung sind, wobei der eine oder die mehreren Verarbeitungsschaltkreise konfiguriert sind, die Thevenin-Äquivalentspannung für jeden aus einer Vielzahl von Zeigermesszeitpunkten durch ein Ermitteln, ob eine Abweichung im Betrag der äquivalenten Lastimpedanz an der Schnittstelle seit einem vorangehenden Zeigermesszeitpunkt größer als die durch den Schwellenwert definierte Abweichung ist oder nicht, und falls dies so ist, durch ein Anpassen des Imaginärteils der für den vorangehenden Zeigermesszeitpunkt berechneten Thevenin-Äquivalentspannung durch den Betrag der Änderung im Spannungszeiger seit diesem vorangehenden Zeigermesszeitpunkt zu aktualisieren, durch ein Berechnen des Imaginärteils der Thevenin-Äquivalentspannung $E_{g,I}^i$ für einen aktuellen Zeigermesszeitpunkt $i$ als

$$E_{g,I}^i = E_{g,I}^{i-1}\left(1 + \left|\bar{V}_{Int_g}^i - \bar{V}_{Int_g}^{i-1}\right|\right),$$ worin $E_{g,I}^{i-1}$ der Imaginärteil der Thevenin-Äquivalentspannung für einen vorangehenden Zeigermesszeitpunkt i-1 ist, $\bar{V}_{Int_g}^i$ der Spannungszeiger für den aktuellen Zeigermesszeitpunkt $i$ ist und $\bar{V}_{Int_g}^{i-1}$ der Spannungszeiger für den vorangehenden Zeigermesszeitpunkt $i$-1 ist, und durch Setzen des Realteils der Thevenin-Äquivalentspannung $E_{g,R}^i$ für den aktuellen Zeigermesszeitpunkt $i$ als $E_{g,R}^i = V_{Int_g}^i$.

**12.** Vorrichtung zur Überwachung der Spannungsstabilität nach Anspruch 11, wobei der eine oder die mehreren Verarbeitungsschaltkreise (14) konfiguriert sind, den Realteil der Thevenin-Äquivalentspannung als $E_{g,R}^0 = V_{Int_g}^0$ zu initialisieren und den Imaginärteil der Thevenin-Äquivalentspannung als

$$E_{g,I}^0 = \sqrt{\left(\frac{Z_s^0 I_{Int_g}^0 - V_{Int_g}^0}{2}\right)^2 - \left(V_{Int_g}^0\right)^2}$$ zu initialisieren, worin $Z_s^0 = \frac{V_{Int_g}^0}{I_{Int_g}^0}$, worin $I_{Int_g}^0$ ein Anfangswert für den Stromzeiger ist, worin $V_{Int_g}^0$ ein Anfangswert für den Spannungszeiger ist.

**13.** Vorrichtung zur Überwachung der Spannungsstabilität nach einem der Ansprüche 11-12, wobei der eine oder die mehreren Verarbeitungsschaltkreise (14) konfiguriert sind, die Thevenin-Äquivalentimpedanz durch Lösen eines Satzes von zwei linearen Gleichungen mit zwei unbekannten Variablen zu aktualisieren, die den Realteil und den Imaginärteil der Thevenin-Äquivalentimpedanzen umfassen, wobei bekannte Variablen im Satz der zwei linearen Gleichungen den Imaginärteil der Thevenin-Äquivalentspannung, wie er aktualisiert wurde, um den Betrag aller Änderungen im Spannungszeiger widerzuspiegeln, und den Realteil der Thevenin-Äquivalentspannung beinhalten, wie er auf den Spannungszeiger für einen aktuellen Zeigermesszeitpunkt gesetzt wurde.

**14.** Vorrichtung zur Überwachung der Spannungsstabilität nach einem der Ansprüche 11-13, wobei der eine oder die mehreren Verarbeitungsschaltkreise (14) konfiguriert sind, dynamisch anzupassen, welcher der Teile des Stromversorgungssystems (2) als den Strom generierend designiert ist, als Reaktion auf ein Erkennen einer Änderung in Richtung oder Betrag des durch eine oder beide Schnittstellen zwischen dem Übertragungskorridor (6) und den Teilen des Stromversorgungssystems (2) fließenden Stroms.

**15.** Vorrichtung zur Überwachung der Spannungsstabilität nach einem der Ansprüche 11-14, wobei der eine oder die mehreren Verarbeitungsschaltkreise (14) konfiguriert sind, zu überwachen, ob ein Unterbrecher für jede mit der Schnittstelle assoziierte Leitung offen oder geschlossen ist, und konfiguriert sind, die äquivalente Lastimpedanz an der Schnittstelle durch ein dynamisches Berechnen der äquivalenten Lastimpedanz an der Schnittstelle ausschließlich aus Zeigermessungen zu überwachen, die an Leitungen gemacht wurden, deren Unterbrecher geschlossen sind.

**Revendications**

**1.** Procédé de surveillance de la stabilité de la tension d'un couloir de transmission (6) à travers lequel une puissance circule entre différentes parties d'un système de puissance (2), le procédé comprenant les étapes suivantes, exécutées par un appareil de surveillance de la stabilité de tension (8) :

poursuivre (120) une tension et une impédance équivalentes de Thévenin d'une partie du système de puissance (2) désignée comme générant ladite puissance, en mettant à jour séparément cette tension et cette impédance ; et

calculer (130) un indice indiquant ladite stabilité de tension en fonction de la tension et de l'impédance équivalentes de Thévenin poursuivies ;

le procédé étant **caractérisé par** les étapes consistant à :

surveiller (110) une impédance de charge équivalente au niveau d'une interface entre le couloir de transmission (6) et ladite partie désignée, l'impédance de charge équivalente au niveau de ladite interface comprenant un rapport d'un phaseur de tension au niveau de ladite interface à un phaseur de courant au niveau de ladite interface ; et

dans lequel la mise à jour de la tension équivalente de Thévenin consiste à mettre à jour la partie imaginaire de la tension pour faire apparaître l'amplitude des éventuelles transformations dudit phaseur de tension qui sont associées à de fortes variations d'amplitude de l'impédance de charge équivalente au niveau de ladite interface, lesdites fortes variations comprenant des variations supérieures à une variation définie par un seuil, dans lequel ladite mise à jour de la tension équivalente de Thévenin consiste, pour chacun d'une pluralité d'instants de mesure du phaseur, à déterminer (240) si oui ou non une variation de l'amplitude de l'impédance de charge équivalente au niveau de ladite interface depuis un instant de mesure de phaseur précédent est supérieure à la valeur définie par un seuil et si cela est le cas, à ajuster (250) la partie imaginaire de la tension équivalente de Thévenin calculée pour l'instant de mesure de phaseur précédent selon l'amplitude de la modification du phaseur de tension depuis ledit instant de mesure de phaseur précédent, dans lequel ledit ajustement consiste à calculer la partie imaginaire de la tension équivalente de Thévenin $E_{g,I}^{i}$ pour un instant de mesure de phaseur courant $i$ sous la forme

$$E_{g,I}^{i} = E_{g,I}^{i-1}\left(1 + \left|\bar{V}_{Int_g}^{i} - \bar{V}_{Int_g}^{i-1}\right|\right),$$ où $E_{g,I}^{i}$ est la partie imaginaire de la tension équivalente de Thévenin pour un instant de mesure de phaseur précédent $i$-1, $\bar{V}_{Int_g}^{i}$ est ledit phaseur de tension pour l'instant de mesure de phaseur courant $i$, et $\bar{V}_{Int_g}^{i-1}$ est ledit phaseur de tension pour l'instant de mesure de phaseur précédent i-1, et dans lequel la mise à jour de la tension équivalente de Thévenin consiste en outre à définir la partie réelle de la tension équivalente de Thévenin $E_{g,R}^{i}$ pour l'instant de mesure de phaseur courant $i$ sous la forme $E_{g,R}^{i} = V_{Int_g}^{i}$ .

**2.** Procédé selon la revendication 1, **caractérisé en outre par** le fait d'initialiser la partie réelle de la tension équivalente de Thévenin sous la forme $E_{g,R}^{0} = V_{Int_g}^{0}$ , et le fait d' initialiser la partie imaginaire de la tension équivalente de Thévenin sous la forme $E_{g,I}^0 = \sqrt{\left(\dfrac{Z_s^0 I_{Int_g}^0 - V_{Int_g}^0}{2}\right)^2 - \left(V_{Int_g}^0\right)^2}$ , où $Z_s^0 = \dfrac{V_{Int_g}^0}{I_{Int_g}^0}$ , où $I_{Int_g}^0$ est une valeur initiale pour ledit phaseur de courant, où $V_{Int_g}^0$ est une valeur initiale pour ledit phaseur de tension.

**3.** Procédé selon l'une quelconque des revendications 1 à 2, dans lequel la mise à jour de l'impédance équivalente de Thévenin consiste à résoudre un ensemble de deux équations linéaires à deux variables inconnues qui comprennent les partie réelle et imaginaire de l'impédance équivalente de Thévenin, dans lequel les variables connues de l'ensemble de deux équations linéaires comprennent la partie imaginaire de la tension équivalente de Thévenin telle qu'elle a été mise à jour pour faire apparaître l'amplitude d'éventuelles modifications du phaseur de tension et la partie réelle de la tension équivalent de Thévenin telle qu'elle est définie en tant que phaseur de tension pour un instant de mesure de phaseur courant.

**4.** Procédé selon l'une quelconque des revendications 1 à 3, **caractérisé en outre par** le fait d'ajuster dynamiquement un seuil définissant la variation définie par un seuil, en fonction de la tension équivalente de Thévenin.

**5.** Procédé selon l'une quelconque des revendications 1 à 4, **caractérisé en outre par** le fait d'adapter dynamiquement celle desdites parties du système de puissance (2) qui est désignée comme générant ladite puissance, en réponse à la détection d'une modification de la direction ou de l'amplitude de la puissance passant à travers l'une des interfaces ou les deux entre le couloir de tension (6) et lesdites parties du système de puissance (2).

**6.** Procédé selon l'une quelconque des revendications 1 à 5, **caractérisé en outre par** le fait de surveiller si un disjoncteur destiné à chaque ligne associée à ladite interface est ouvert ou fermé, et dans lequel la surveillance de l'impédance de charge équivalente au niveau de ladite interface consiste à calculer dynamiquement l'impédance de charge équivalente au niveau de ladite interface exclusivement à partir de mesures de phaseurs prises sur des lignes dont les disjoncteurs sont fermés.

**7.** Procédé selon la revendication 6, dans lequel, en réponse à la détection de l'ouverture ou de la fermeture d'un ou de plusieurs desdits disjoncteurs, ladite mise à jour consiste à mettre à jour la partie imaginaire de la tension équivalente de Thévenin afin de faire apparaître l'amplitude de la modification qui en résulte dudit phaseur de tension, tel qu'il a été calculé dynamiquement, sans réinitialiser la partie imaginaire de la tension équivalente de Thévenin.

**8.** Procédé selon l'une quelconque des revendications 1 à 7, dans lequel la mise à jour de la tension équivalente de Thévenin consiste en outre, en réponse à de faibles variations de l'amplitude de l'impédance de charge équivalente au niveau de ladite interface, à réduire ou à augmenter (260) la partie imaginaire de la tension équivalente de Thévenin en effectuant une modification prédéfinie en pourcentage lorsque lesdites faibles variations ont ou n'ont pas respectivement la même polarité que des variations estimées de ladite impédance équivalente de Thévenin, lesdites faibles variations comprenant des variations inférieures à la variation définie par un seuil.

**9.** Procédé selon la revendication 8, dans lequel, en réponse à de faibles variations de l'amplitude de l'impédance de charge équivalente au niveau de ladite interface, l'augmentation de la partie imaginaire de la tension équivalente de Thévenin consiste à calculer la partie imaginaire de la tension équivalente de Thévenin sous la forme

$$E_{g,I}^i = E_{g,I}^{i-1}\left(1 + \left|E_{g,I}^{i-1} \times k\right|\right)$$ et la réduction de la partie imaginaire de la tension imaginaire de la tension équivalente de Thévenin consiste à calculer la partie imaginaire de la tension équivalente de Thévenin sous la forme

$$E_{g,I}^i = E_{g,I}^{i-1}\left(1 - \left|E_{g,I}^{i-1} \times k\right|\right),$$ où $E_{g,I}^{i-1}$ est la partie imaginaire de la tension équivalente de Thévenin pour un instant de mesure de phaseur courant $i$, $E_{g,I}^{i-1}$ est la partie imaginaire de la tension équivalente de Thévenin pour un instant de mesure de phaseur précédent $i-1$, et k est un paramètre spécifié à l'avance configuré pour contraindre l'erreur de poursuite afin qu'elle reste entre des bornes prédéfinies, et dans lequel la mise à jour de la tension équivalente de Thévenin consiste en outre à définir la partie réelle de la tension équivalente de Thévenin $E_{g,R}^i$ pour l'instant de mesure de phaseur courant $i$ sous la forme $E_{g,R}^i = V_{Int_g}^i$ .

**10.** Procédé selon la revendication 9, dans lequel, en réponse à de faibles variations de l'amplitude de l'impédance de charge équivalente au niveau de ladite interface, l'augmentation de la partie imaginaire de la tension équivalente de Thévenin consiste à calculer inconditionnellement la partie imaginaire de la tension équivalente de Thévenin sous la forme $E_{g,I}^{i} = E_{g,I}^{i-1}\left(1 + \left|E_{g,I}^{i-1} \times k\right|\right)$ et la réduction de la partie imaginaire de la tension équivalente de Thévenin consiste à calculer inconditionnellement la partie imaginaire de la tension équivalente de Thévenin sous la forme $E_{g,I}^{i} = E_{g,I}^{i-1}\left(1 - \left|E_{g,I}^{i-1} \times k\right|\right)$.

**11.** Appareil de surveillance de la stabilité de tension (8) configuré pour surveiller la stabilité de tension d'un couloir de transmission (6) à travers lequel une puissance circule entre différentes parties d'un système de puissance (2), l'appareil de surveillance de la stabilité de tension (8) comprenant un ou plusieurs circuits de traitement (14) configurés pour :

poursuivre une tension et une impédance équivalentes de Thévenin de ladite partie désignée en mettant séparément à jour cette tension et cette impédance ; et calculer un indice indiquant ladite stabilité de tension en fonction de la tension et de l'impédance équivalentes de Thévenin poursuivies ;

**caractérisé en ce que** lesdits un ou plusieurs circuits de traitement (14) sont configurés pour :

surveiller une impédance de charge équivalente au niveau d'une interface entre le couloir de transmission (6) et une partie du système de puissance (2) désignée comme générant ladite puissance, l'impédance de charge équivalente au niveau de ladite interface comprenant un rapport d'un phaseur de tension au niveau de ladite interface à un phaseur de courant au niveau de ladite interface ; et
mettre à jour la tension équivalente de Thévenin en mettant à jour une partie imaginaire de la tension pour faire apparaître l'amplitude des éventuelles modifications dudit phaseur de tension qui sont associées à de fortes variations d'amplitude de l'impédance de charge équivalente au niveau de ladite interface, lesdites fortes variations comprenant des variations supérieures à une variation définie par un seuil, dans lequel lesdits un ou plusieurs circuits de traitement sont configurés pour mettre à jour la tension équivalente de Thévenin en déterminant, pour chacun d'une pluralité d'instants de mesure du phaseur, si oui ou non une variation de l'amplitude de l'impédance de charge équivalente au niveau de ladite interface depuis un instant de mesure de phaseur précédent est supérieure à la variation définie par un seuil et, si cela est le cas, ajuster la partie imaginaire de la tension équivalente de Thévenin calculée pour l'instant de mesure de phaseur précédent selon l'amplitude de la modification dudit phaseur de tension depuis ledit instant de mesure de phaseur précédent, en calculant la partie imaginaire de la tension équivalente de Thévenin $E_{g,I}^{i}$ pour un instant de mesure de phaseur courant $i$ sous la forme $E_{g,I}^{i} = E_{g,I}^{i-1}\left(1 + \left|\bar{V}_{Int_g}^{i} - \bar{V}_{Int_g}^{i-1}\right|\right)$, où $E_{g,I}^{i-1}$ est la partie imaginaire de la tension équivalente de Thévenin pour un instant de mesure de phaseur précédent $i$-1, $\bar{V}_{Int_g}^{i}$ est ledit phaseur de tension pour l'instant de mesure de phaseur courant $i$, et $\bar{V}_{Int_g}^{i-1}$ est ledit phaseur de tension pour l'instant de mesure de phaseur précédent i-1, et définir la partie réelle de la tension équivalente de Thévenin $E_{g,R}^{i}$ pour l'instant de mesure de phaseur courant $i$ sous la forme $E_{g,R}^{i} = V_{Int_g}^{i}$.

**12.** Appareil de surveillance de la stabilité de tension selon la revendication 11, dans lequel lesdits un ou plusieurs circuits de traitement (14) sont configurés pour initialiser la partie réelle de la tension équivalente de Thévenin sous la forme $E_{g,R}^{0} = V_{Int_g}^{0}$, et pour initialiser la partie imaginaire de la tension équivalente de Thévenin sous la forme

$$E_{g,I}^{0} = \sqrt{\left(\frac{Z_s^0 I_{Int_g}^0 - V_{Int_g}^0}{2}\right)^2 - \left(V_{Int_g}^0\right)^2}, \text{ où } Z_s^0 = \frac{V_{Int_g}^0}{I_{Int_g}^0}, \text{ où } I_{Int_g}^0 \text{ est une valeur initiale pour ledit phaseur de}$$

courant, où $V_{Int_g}^0$ est une valeur initiale pour ledit phaseur de tension.

**13.** Appareil de surveillance de la stabilité de tension selon l'une quelconque des revendications 11 à 12, dans lequel lesdits un ou plusieurs circuits de traitement (14) sont configurés pour mettre à jour l'impédance équivalente de Thévenin en résolvant un ensemble de deux équations linéaires à deux variables inconnues qui comprennent les parties réelle et imaginaire de l'impédance équivalente de Thévenin, dans lequel les variables connues de l'ensemble de deux équations linéaires comprennent la partie imaginaire de la tension équivalente de Thévenin telle qu'elle a été mise à jour pour faire apparaître l'amplitude d'éventuelles modifications du phaseur de tension et la partie réelle de la tension équivalente de Thévenin telle qu'elle est définie en tant que phaseur de tension pour un instant de mesure de phaseur courant.

**14.** Appareil de surveillance de la stabilité de tension selon l'une quelconque des revendications 11 à 13, dans lequel lesdits un ou plusieurs circuits de traitement (14) sont en outre configurés pour adapter dynamiquement celle desdites parties du système de puissance (2) qui est désignée comme étant ladite puissance, en réponse à la détection d'une modification de la direction ou de l'amplitude de la puissance circulant à travers une interface ou les deux entre le couloir de transmission (6) et lesdites parties du système de puissance (2).

**15.** Appareil de surveillance de la stabilité de tension selon l'une quelconque des revendications 11 à 14, dans lequel lesdits un ou plusieurs circuits de traitement (14) sont en outre configurés pour surveiller si un disjoncteur destiné à chaque ligne associée à ladite interface est ouvert ou fermé, et sont configurés pour surveiller l'impédance de charge équivalente au niveau de ladite interface en calculant dynamiquement l'impédance de charge équivalente au niveau de ladite interface exclusivement à partir de mesures de phaseurs prises sur des lignes dont les disjoncteurs sont fermés.

FIG. 1

100

110

MONITOR THE EQUIVALENT LOAD IMPEDANCE AT THE INTERFACE BETWEEN THE TRANSMISSION CORRIDOR AND THE PART OF THE POWER SYSTEM DESIGNATED AS GENERATING POWER, THE EQUIVALENT LOAD IMPEDANCE AT THE INTERFACE COMPRISING THE RATIO OF A VOLTAGE PHASOR AT THE INTERFACE TO A CURRENT PHASOR AT THE INTERFACE

120

TRACK THE THEVENIN EQUIVALENT VOLTAGE AND IMPEDANCE OF THE DESIGNATED PART BY SEPARATELY UPDATING THAT VOLTAGE AND IMPEDANCE, WHEREIN UPDATING THE THEVENIN EQUIVALENT VOLTAGE COMPRISES UPDATING THE VOLTAGE TO REFLECT THE MAGNITUDE OF ANY CHANGES IN THE VOLTAGE PHASOR THAT ARE ASSOCIATED WITH LARGE VARIATIONS IN THE MAGNITUDE OF THE EQUIVALENT LOAD IMPEDANCE AT THE INTERFACE

130

COMPUTE AN INDEX INDICATING THE VOLTAGE STABILITY AS A FUNCTION OF THE TRACKED THEVININ EQUIVALENT VOLTAGE AND IMPEDANCE

FIG. 2

FIG. 3

210 — COMPUTE VOLTAGE PHASOR AT THE POWER GENERATING PART INTERFACE

220 — COMPUTE AGGREGATED CURRENT PHASOR AT THE POWER GENERATING PART INTERFACE, AS A FUNCTION OF THE AGGREGATED ACTIVE AND REACTIVE POWERS AT THE POWER GENERATING PART INTERFACE

230 — COMPUTE EQUIVALENT LOAD IMPEDANCE AT THE POWER GENERATING PART INTERFACE, AS THE RATIO OF THE COMPUTED VOLTAGE PHASOR AND AGGREGATED CURRENT PHASOR

110

120

240 — SIZE OF VARIATION IN MAGNITUDE OF THE EQUIVALENT LOAD IMPEDANCE AT THE POWER GENERATING PART INTERFACE ?

LARGE

SMALL

250 — ADJUST THE THEVENIN EQUIVALENT VOLTAGE COMPUTED FOR THE PREVIOUS PHASOR MEASUREMENT TIME BY THE CHANGE IN THE MAGNITUDE OF THE VOLTAGE PHASOR SINCE THAT PREVIOUS PHASOR MEASUREMENT TIME

INSIGNIFICANT

270 — NO ADJUSTMENT TO THEVENIN EQUIVALENT VOLTAGE

260 — DECREASE OR INCREASE THE THEVENIN EQUIVALENT VOLTAGE BY A PREDEFINED PERCENTAGE CHANGE WHEN THE SMALL VARIATIONS DO OR DO NOT HAVE THE SAME POLARITY AS ESTIMATED VARIATION IN THE THEVENIN EQUIVALENT IMPEDANCE, RESPECTIVELY

280 — SOLVE A SET OF TWO LINEAR EQUATIONS FOR THE THEVENIN EQUIVALENT IMPEDANCE, BASED ON THE THEVENIN EQUIVALENT VOLTAGE (REFLECTING ANY ADJUSTMENTS)

FIG. 4

FIG. 5

FIG. 6

FIG. 7

EP 3 039 763 B1

FIG. 8

BUS 2
RECEIVING

$P_{2agg}$ ↑

$P_{1agg}$ ↑

BUS 1
SENDING

(a)

BUS 2
SENDING

$P_{2agg}$ ↓

$P_{1agg}$ ↓

BUS 1
RECEIVING

(b)

BUS 2
RECEIVING/SENDING

$P_{2agg}$ ↓

$P_{1agg}$ ↑

BUS 1
SENDING/RECEIVING

(c)

⇒ IF $P_{1agg} > P_{2agg}$
THEN
    BUS 1 SENDING
ELSE
    BUS 2 SENDING
END

**FIG. 9**

FIG. 10A

FIG. 10B

REACTIVE POWER MARGIN (MVAR)

TIME (S)

**FIG. 10C**

BUS 2

CUT 2

BUS 4

BUS 5

BUS 3

CUT 1

BUS 1

# FIG. 11A

RATIO OF IMPEDANCES

CORRECT POLARITY
WRONG POLARITY

TIME (S)

FIG. 11B

FIG. 11C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7200500 B
- US 6219591 B1

- US 7200500 B2

**Non-patent literature cited in the description**

- **S. CORSI ; G. N. TARANTO.** A real-time voltage instability identification algorithm based on local phasor measurements. *IEEE Trans. Power Syst.,* August 2008, vol. 23 (3), 1271-1279